Europäisches Patentamt

(19) European Patent Office

Office européen des brevets

(11) **EP 0 990 292 B1**

(12) **EUROPÄISCHE PATENTSCHRIFT**

(45) Veröffentlichungstag und Bekanntmachung des Hinweises auf die Patenterteilung:
**02.04.2003 Patentblatt 2003/14**

(51) Int Cl.⁷: **H02H 3/33**

(21) Anmeldenummer: **98933614.4**

(22) Anmeldetag: **15.06.1998**

(86) Internationale Anmeldenummer:
**PCT/EP98/03579**

(87) Internationale Veröffentlichungsnummer:
**WO 98/058432 (23.12.1998 Gazette 1998/51)**

(54) **VERFAHREN UND EINRICHTUNG ZUR ISOLATIONS- UND FEHLERSTROMÜBERWACHUNG IN EINEM ELEKTRISCHEN WECHSELSTROMNETZ**

METHOD AND DEVICE FOR MONITORING INSULATION AND FAULT CURRENT IN AN ELECTRICAL ALTERNATING CURRENT NETWORK

PROCEDE ET DISPOSITIF POUR LA SURVEILLANCE DE L'ISOLATION ET DES COURANTS DE DEFAUT DANS UN RESEAU ELECTRIQUE A COURANT ALTERNATIF

(84) Benannte Vertragsstaaten:
**AT BE CH DE ES FR GB IE IT LI LU NL SE**

(30) Priorität: **17.06.1997 DE 19725532**

(43) Veröffentlichungstag der Anmeldung:
**05.04.2000 Patentblatt 2000/14**

(73) Patentinhaber: **Dipl.-Ing. Walther Bender GmbH & Co. KG**
**35305 Grünberg (DE)**

(72) Erfinder:
• **KAMMER, Michael**
**D-35410 Hungen (DE)**
• **KAUL, Karl-Hans**
**D-36325 Feldatal (DE)**
• **HACKL, Dieter**
**D-35463 Fernwald (DE)**

(74) Vertreter: **Schumacher, Bernd, Dipl.-Ing.**
**Am Schwaberg 13**
**63454 Hanau (DE)**

(56) Entgegenhaltungen:
**FR-A- 2 523 766          GB-A- 2 258 095**

**Beschreibung**

Die Erfindung betrifft ein Verfahren und eine Einrichtung zur Isolations- und Fehlerstromüberwachung in einem elektrischen Wechselstromnetz, wobei in diesem der durch vektorielle Addition gebildete Differenzstrom zwischen zumindest zwei Netzleitern des Netzes erfaßt wird, wobei ferner das Produkt zwischen der Amplitude des Wechselstromanteils des Differenzstromes und dem Kosinus des Phasenwinkels φ zwischen dem Wechselstromanteil des Differenzstromes sowie der Netzwechselspannung zwischen zumindest zwei Leitern des Netzes als Maß für den resistiven Fehlerstrom des Netzes ermittelt wird und wobei die Lastabschaltung dann durchgeführt wird, wenn der resistive Fehlerstrom einen bestimmten Ansprechwert übersteigt.

In elektrischen Netzen können durch fehlerhafte Isolation Fehlerströme über Erde oder über einen Schutzleiter abfließen. Der durch den Fehlerstrom erzeugte Spannungsabfall an berührbaren, im Normalbetrieb spannungsfreien Teilen kann personengefährdend sein (indirekte Berührung). Bei direktem Berühren offener, spannungsführender Teile eines Stromkreises kann ein Fehlerstrom über Personen fließen, der nur durch den Widerstand des menschlichen Körpers begrenzt ist. Außer Personenschäden können Fehlerströme durch Beeinflussung elektrischer Systeme oder durch Entstehen von Wärmeenergie an der Fehlerstelle Sachschäden verursachen. Zum Schutz gegen Personengefährdung und vor Sachschäden durch Fehlerströme werden zusätzlich zu weiteren Schutzmaßnahmen Fehlerstrom-Schutzschalter (FI-Schutzschalter oder RCD's) eingesetzt. Diese Geräte bilden über einen Summenstromwandler die vektorielle Summe der Ströme der Netzleiter und aus dem Ergebnis des Gesamtdifferenzstroms dessen Betrag. Der Gesamtdifferenzstrom kann Wechselstromanteile und beim Anschluß von Gleichstromverbrauchern, wie von Antrieben mit Frequenzumrichtern mit einem Gleichstromzwischenkreis, auch Gleichstromanteile enthalten. Wenn der Gesamtdifferenzstrom einen bestimmten Grenz- bzw. Ansprechwert übersteigt, wird der fehlerbehaftete Stromkreis abgeschaltet.

Fehlerstrom-Schutzschalter können nach allgemeiner Kenntnis der einschlägigen Fachkreise nur bei Netzen begrenzter Größe eingesetzt werden, weil sonst die natürlichen kapazitiven Ableitströme größer als der für den Personenschutz notwendige Grenzwert für den Fehlerstrom werden. Die Folge davon sind fehlerhafte bzw. ungewollte oder unnötige Lastabschaltungen.

Bei der dem Oberbegriff von Anspruch 1 zugrundeliegenden D1 - GB-A-2 258 095 - wird über einen Differenzstrommesser 1 nur der wechselstromseitige Differenzstrom erfaßt. Von diesem wird über einen klassischen Synchrongleichrichter 3,4,5 sehr schmalbandig nur die resistive netzfrequente Wechselstromkomponente erfaßt, die phasengleich zur Netzwechselspannung ist. Dieser resistive Wechselstromanteil wird mit einem Schwellwert verglichen. Der kapazitive netzfrequente Wechselstromanteil wird bei D1 unterdrückt. Allerdings kann zum separaten Erfassen des kapazitiven netzfrequenten Wechselstromanteils ein zweiter Synchrongleichrichter vorhanden sein, der die um 90 Grad phasenverschobene kapazitive Komponente erfaßt und separat mit einem weiteren Schwellwert vergleicht.

Bei D1 werden nicht netzfrequente Differenzstromanteile nicht erfaßt, weil die Synchrongleichrichter-Auswertung eine ausgeprägte Filterfunktion hat. Gleichstromanteile bleiben bei D1 allein durch die Art der Differenzstromerfassung unberücksichtigt.

Eine Zusammenfassung und irgendwie kombinierte Auswertung von netzfrequenten resistiven und kapazitiven Wechselstromanteilen findet bei D1 nicht statt.

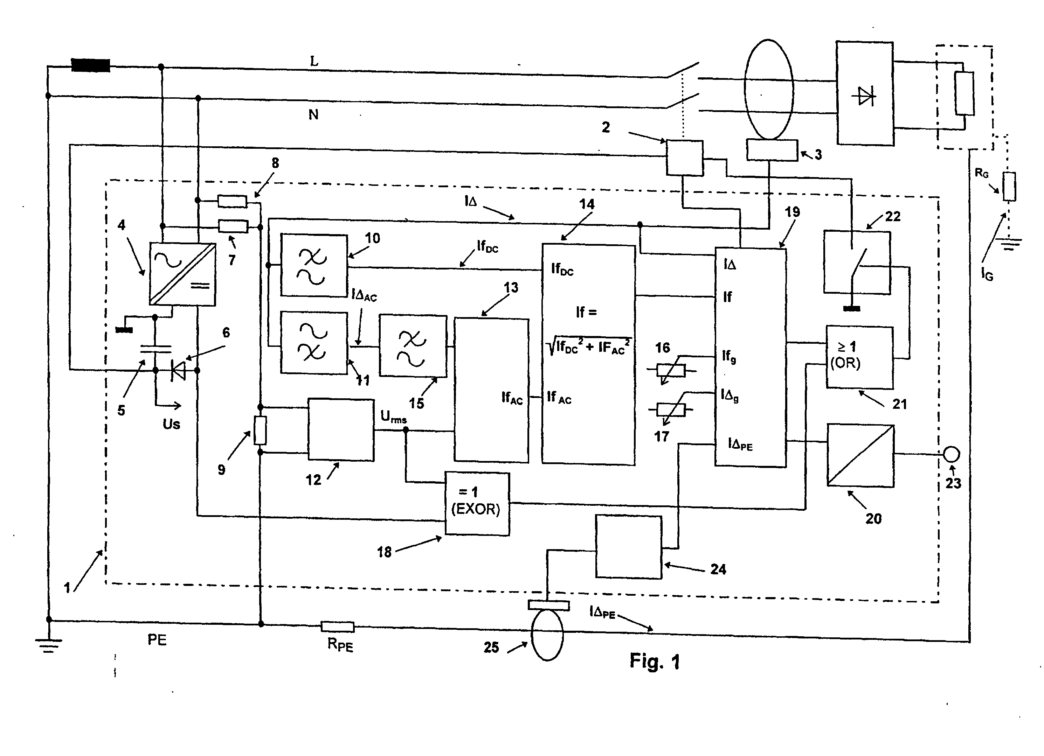

D2 - FR-A-2 523 766 - beschreibt eine allstromsensitive Erfassung des Differenzstroms. Aufgrund thermischer Probleme erfolgt eine getrennte Auswertung von Gleichstromanteilen (im unteren Zweig 30 von Fig, 1) und von kombinierten Wechselstromanteilen (im oberen Zweig 28 von Fig. 1). Eine Trennung der Wechselstromanteile in resistive und kapazitive Anteile findet überhaupt nicht statt. Auch eine Körperbewertung der Wechselstromanteile sowie eine Zusammenfassung der Wechselstromanteile und der Gleichstromanteile im Sinne des Anmeldungsgegenstandes erfolgt nicht. Eine Auslösung erfolgt immer dann, wenn entweder der sehr unsensibel erfaßte Gleichstromanteil oder der sensibler erfaßte kombinierte Wechselstromanteil (kapazitiv und resistiv) bestimmte Schwellwerte übersteigt.

Bei den heutigen Wechselstromnetzen erfolgt ein weit verbreiteter Einsatz von Frequenzumrichtern und Schaltnetzteilen. Dieses führt dazu, daß im Fehlerfalle sowohl Gleichstromanteile als auch weitere nicht netzfrequente Differenzstromanteile in gefährdender Größenordnung entstehen können. Bei einem Einsatz der Einrichtung von D1 kann es dann sein, daß diese bei einem Fehler an einem Umrichterzwischenkreis nicht auslöst, da die netzfrequenten Anteile zu klein sind, obwohl gefährliche DC und motorfrequente Fehlerströme vorliegen.

Der vorliegenden Erfindung liegt daher die Aufgabe zugrunde, ein Verfahren der im Oberbegriff genannten Art so auszubilden, daß unter Vermeidung der geschilderten Nachteile ein vielseitigerer Einsatz bei üblichen Wechselstromnetzen und eine sicherere Fehlererfassung bei optimalem Personenschutz gewährleistet werden.

Zur Lösung der gestellten Aufgabe zeichnet sich ein Verfahren der im Oberbegriff von Anspruch 1 genannten Art erfindungsgemäß durch die im Kennzeichen dieses Anspruchs aufgeführten Merkmale aus, nämlich dadurch, daß der Wechsel- und Gleichstromanteile enthaltende Differenzstrom des Wechselstromnetzes allstromsensitiv erfaßt wird, daß der kapazitive sowie resistive Komponenten enthaltende Wechselstromanteil des allstromsensitiv erfaßten Differenzstromes durch eine Hochpaßfilterung mit einer unterhalb der Netzfrequenz liegenden ersten Grenzfrequenz gewonnen wird, daß der als resistives Fehlerstromsignal zu wertende Gleichstromanteil des allstromsensitiv erfaßten Differenzstromes durch eine Tiefpaßfilterung mit einer unterhalb der ersten Grenzfrequenz liegenden zweiten Grenzfrequenz gewonnen wird, daß der Wechselstromanteil des Differenzstroms nach der Hochpaßfilterung für einen Personenschutz durch eine Tiefpaßfilterung frequenzabhängig bewertet wird, daß das Produkt zwischen der Amplitude des Wechselstromanteils des Differenzstromes und dem Kosinus des Phasenwinkels φ durch eine Wirkleistungsmessung indirekt ermittelt wird, daß bei dieser Wirkleistungsmessung eine Multiplikation des Wechselstromanteils des Differenzstromes mit einem Multiplikationssignal und eine anschließende arithmetische Mittelwertbildung durchgeführt werden, wobei das Multiplikationssignal der bezüglich ihres Effektivwertes konstant gehaltenen Netzwechselspannung entspricht, daß das gleichstromseitige resistive Fehlerstromsignal und das aus dem Wechselstromanteil ermittelte wechselstromseitige resistive Fehlerstromsignal zum Ermitteln eines resistiven Gesamffehlerstromsignals bzw. Gesamtfehlerstroms einer quadratischen Addition unterworfen werden und daß die Lastabschaltung dann durchgeführt wird, wenn das resistive Gesamtfehlerstromsignal einen bestimmten Ansprechwert übersteigt.

Im Rahmen der Erfindung werden demnach gemäß Anspruch 1 mehrere neue Maßnahmen vorgeschlagen, die strukturellen Merkmalen in Anspruch 10 entsprechen:

1. Allstromsensitive Erfassung des Differenzstroms (also Erfassung von Wechsel- und Gleichstromanteilen beliebiger Frequenz);

2. Trennen von Gleichstrom- und Wechselstromanteilen durch Filterung;

3. Frequenzbewertung (also Bewertung nach dem Körpermodell) des Wechselstromanteils durch Filterung;

4. Breitbandige Erfassung des bewerteten resistiven Wechselstromanteils durch Wirkleistungsmessung;

5. Zusammenfassung des resistiven Gleichstromanteils und des bewerteten, breitbandig erfaßten resistiven Wechselstromanteils durch quadratische Addition zu einem Gesamtfehlerstromsignal;

6. Auslösung in Abhängigkeit von dem zusammengefaßten Gesamtfehlerstromsignal.

Diese Maßnahmen erlauben eine äußerst vielseitig einsetzbare und extrem sichere Netzüberwachung, bei der auch Gleichstromanteile und durch die Wirkleistungsmessung praktisch beliebige Frequenzanteile berücksichtigt werden. Durch die Frequenz- bzw. Körperbewertung (Bewertung nach einem Körpermodell) der Wechselstromanteile und durch die spätere Kombination der resistiven Gleichstrom- und Wechselstromanteile kann eine äußerst sichere und bedarfsgerecht angepaßte breitbandige Netzüberwachung mit dem Ergebnis eines hervorragenden Personenschutzes erzielt werden. Dieses ist besonders bei Fehlern in Versorgungsnetzen mit Umrichteranwendungen äußerst wichtig.

Gemäß den bevorzugten Ansprüchen 2 bis 4 sind zwei verschieden große Grenz - oder Ansprechwerte vorgesehen, nämlich ein kleinerer, von z.B. 30 mA, für einen Vergleich mit dem ermittelten resistiven Gesamtfehlerstrom und ein größerer, von z.B. 300 mA, für einen Vergleich mit dem allstromsensitiv erfaßten gesamten Differenzstrom. Bei einer Grenzwertüberschreitung erfolgt eine Last- bzw. Netzabschaltung. Die Grenzwerte können einstellbar sein und gemäß Anspruch 14 auch flexibel an die jeweiligen Netzverhältnisse angepaßt werden.

In umfangreichen Netzen war bisher der Einsatz von Fehlerstrom-Schutzeinrichtungen mit Grenzwerten für den Personenschutz schon deshalb nicht möglich, weil der durch den Anlagenaufbau vorhandene und in vielen Fällen nicht reduzierbare natürliche Ableitstrom über dem Grenzwert der Schutzeinrichtung lag. Dies ist bei vielen Anwendungen, z. B. auf Baustellen mit Kabeln, die bei der Arbeit beschädigt werden können, sehr problematisch und führt noch heute oft zu Unfällen. Da bei der vorliegenden Methode der resistive Fehlerstrom als ein Teil des gesamten Differenzstroms gezielt ermittelt und ausgewertet wird, sind erstmalig entsprechende Unterscheidungen und eine getrennte Überwachung für einen Personenschutz und einen Geräteschutz möglich. Ähnliche gerätetechnische Lösungen wurden nicht bekannt, obwohl das Problem der hohen Ableitströme, die einen Personenschutz über einen FI- bzw. Fehlerstrom-Schutzschalter zunächst als unmöglich erscheinen lassen, schon existiert, seitdem es elektrische Verteilernetze gibt.

Es sind zwei unterschiedliche Grenz- oder Ansprechwerte vorgesehen, die auch unterschiedlich frequenzbewertet sind, um gleichzeitig einen Personenschutz und einen Anlagenschutz realisieren zu können. Bisher konnte entweder nur eine Fehlerstromschutzmaßnahme mit einem niedrigen Grenzwert (z.B. 30mA) zum Personenschutz oder eine Anlagenschutzmaßnahme mit einem höheren Grenzwert (z.B. 300mA) eingesetzt werden. Auch bestand bei den bekannten passiven Einrichtungen bisher keine Möglichkeit einer Frequenzbewertung mit einem Tiefpaß zum Personenschutz und einem Allpass zum Anlagenschutz, da diese passiven Einrichtungen wegen der notwendigen Sensitivität auf die Netzfrequenz optimiert werden mußten und deshalb nur eine sehr geringe Bandbreite aufgewiesen haben (ca. 30Hz bis max. 1kHz). Selbst bei Versuchen mit aktiven Fehlerstromschutzeinrichtungen (mit Hilfsspannung und Elektronik) mußte der Frequenzbereich durch einen Tiefpaß nach oben bei ca. 1kHz begrenzt werden, da in oberwellenhaltigen Netzen die durch diese erzeugten Oberwellen der kapazitiven Ableitströme (und nicht der resistiven Fehlerströme) die Geräte zu Fehlauslösung brachten.

Die bevorzugten Merkmale der Ansprüche 5 und 6 ermöglichen bei einem Wechselstromnetz mit einem Potentialausgleichsleiter eine Funktionsüberprüfung desselben. Das ist aus Sicherheitsgründen äußerst vorteilhaft, weil bei einem Fehler des Potentialausgleichsleiters der gesamte Netzableitstrom bzw. der allstromsensitiv erfaßte gesamte Differenzstrom zu einem personengefährdenden Fehlerstrom werden kann. Diese gefährliche Situation kann gemäß Anspruch 5 dadurch erfaßt werden, daß im Potentialausgleichsleiter eine vergleichsweise große Stromabnahme, im schlimmsten Fall bis zum Wert Null, festgestellt wird. Im Normalfall teilt sich der gesamte Differenzstrom entsprechend auf den Widerstand des Schutz- bzw. Potentialausgleichsleiters und auf den Widerstand (Erdungswiderstand) einer zusätzlichen Erdung auf. Es besteht also im Normalfall Proportionalität zwischen dem gesamten Differenzstrom und dem Strom Im Potentialausgleichsleiter.

Die Merkmale von Anspruch 7 ermöglichen eine zweckmäßige Erweiterung des Verfahrens auf ein dreiphasiges Wechselstromnetz.

Eine im Fehlerfalle allpolige Last- bzw. Netzabschaltung gemäß Anspruch 8, also eine Totalabschaltung, ist aus Sicherheitsgründen bevorzugt. Dieses gilt vor allem auch für die Weiterbildung gemäß Anspruch 9, da hierdurch verhindert wird, daß eine Wiedereinschaltung erfolgen kann, obwohl das Netz noch Isolationsfehler aufweist. Ohne diese Maßnahme würde sonst ein überflüssiges und gefährliches wiederholtes Ein- und Ausschalten erfolgen.

Der vorliegenden Erfindung liegt ferner die Aufgabe zugrunde, eine zum Durchführen des erfindungsgemäßen Verfahrens geeignete Einrichtung zu schaffen. Zu diesem Zweck zeichnet sich eine Einrichtung mit einem zumindest zwei Netzleiter eines Wechselstromnetzes umfassenden Differenzstromsensor und mit einem Differenzstromrelais, das über einen Leistungs- oder Lastschalter eine Last- bzw. Netzabschaltung durchführt, sobald der Differenzstrom einen bestimmten Ansprechwert übersteigt, erfindungsgemäß durch die kennzeichnenden Merkmale von Anspruch 10 aus - nämlich dadurch, daß der Differenzstromsensor den Differenzstrom unter Einschluß von Wechsel- und Gleichstromkomponenten allstromsensitiv erfaßt, daß ein mit dem Differenzstrommesser verbundener erster Tiefpaß ausgangsseitig ein Fehlerstromsignal liefert, welches den gleichstrombedingten resistiven Fehlerstrom des Wechselstromnetzes repräsentiert, daß das Differenzstromrelais ein elektronisches Phasen-Modul aufweist, das aus dem über einen Hochpaß ermittelten Wechselstromanteil des Differenzstroms und aus einer aus der Netzwechselspannung abgeleiteten Vergleichsspannung unter Berücksichtigung des Phasenwinkels ein Fehlerstromsignal ermittelt, welches den wechselstrombedingten resistiven Fehlerstrom des Wechselstromnetzes repräsentiert, daß zwischen den Hochpaß und das Phasenmodul ein frequenzbewertender zweiter Tiefpaß geschaltet ist, der die mit zunehmender Frequenz abnehmende Frequenzabhängigkeit des menschlichen Körpers nachbildet, daß die Ausgänge des ersten Tiefpasses und des Phasen-Moduls mit einem Addierer-Modul verbunden sind, das die beiden Fehlerstromsignale zu einem ausgangsseitigen, einem Gleichstromsignal entsprechenden Gesamtfehlerstromsignal quadratisch addiert, daß der Ausgang des Addierer-Moduls mit dem Eingang eines Vergleicher-Moduls verbunden ist, das das Gesamtfehlerstromsignal mit einem für den Personenschutz geeigneten kleineren Ansprechwert vergleicht und den Lastschalter auslösend ansteuert, wenn dieser Ansprechwert überschritten wird.

Diese Einrichtung ermöglicht mit dem Phasen-Modul eine wirksame Realisierung und Durchführung des erfindungsgemäßen Verfahrens, wobei die allstromsensitive Erfassung ein wesentlich größeres Anwendungsgebiet erschließt und eine deutlich größere Sicherheit ergibt. Das gilt auch für die Weiterbildung von Anspruch 11 und die damit verbundene getrennte Überwachung auf Personenschutz (mit einem kleineren resistiven Fehlerstrom) und auf Anlagenschutz (mit einem größeren Gesamtdifferenzstrom, der auch die mit der Größe eines Netzes ansteigenden großen kapazitiven Ableitströme beinhaltet).

Fehlerstrom-Schutzschaltungen, die auf dem Prinzip der magnetischen Summenstrom- bzw. Differenzstromerfassung basieren, sind seit den 20er Jahren bekannt. Erst in den 60er Jahren wurde jedoch eine Ansprechempfindlichkeit erreicht, die grundsätzlich einen Personenschutz durch niedrige Ansprechwerte (10 bis 60 mA) möglich machte. In Deutschland wurden bis zum heutigen Tage nur netzspannungsunabhängige Fehlerstrom-Schutzeinrichtungen für den Schutz von Personen gegen direkte und indirekte Berührung von den Normen beschrieben und eingesetzt. Netzspannungsunabhängige Fehlerstrom-Schutzeinrichtungen erfassen den Differenzstrom eines Netzes mit Hilfe eines Magnetkernes, durch den die stromführenden Netzleiter geführt sind und der eine Sekundärwicklung besitzt, in der beim Auftreten eines Differenzstromes eine Spannung induziert wird. Die Sekundärseite ist so abgeschlossen, daß die induzierte Spannung einen ausreichend großen Strom treiben kann, der dann elektromagnetisch ein Schaltschloß betätigt, das mit Schaltkontakten das Netz auftrennt. Das Auslösesystem ist elektrisch und mechanisch so abgestimmt, daß die Auslösung bei einem festen Ansprechwert stattfindet (für Personenschutz meistens 30mA). Die relativ kleine zur Verfügung stehende Betätigungsenergie erfordert eine sehr sensible Abstimmung zwischen der Sensorik und dem Magnetsystem inklusive der Mechanik zum Auftrennen der Schaltkontakte. Um zu verhindern, daß die empfindliche Mechanik durch Ablagerungen "schwergängiger" wird und damit der Ansprechwert unter Umständen bis zum Nichtauslösen erhöht wird, muß das System regelmäßig "bewegt" werden. Das geschieht durch Betätigung einer Prüftaste, die einen Differenzstrom simuliert und den Fehlerstrom-Schutzschalter auslöst. In der Praxis werden Fehlerstrom-Schutzschalter jedoch nicht wie erforderlich geprüft, so daß die Schutzmaßnahme im Fehlerfall oft nicht gewährleistet wird.

Hilfsspannungsabhängige elektronische Systeme, bei denen der genannte Nachteil nicht vorhanden ist, wurden bisher aus Sicherheitsgründen nicht zugelassen. Man ging bis heute davon aus, daß dann wegen möglicher elektronischer Komponenten-Ausfälle die Schutzmaßnahme im Fehlerfalte nicht gewährleistet werden könne.

Mit der vorliegenden Fehlerstrom-Schutzeinrichtung wird jedoch dieses Vorurteil überwunden, und es handelt sich hierbei um ein äußerst sicheres, hilfsspannungsabhängiges, elektronisches System, das vom zu überwachenden Netz gespeist wird. Durch verschiedene Maßnahmen - insbesondere der in den Ansprüchen 12 bis 16 genannten Art - wird eine sehr hohe Funktionssicherheit erreicht, die diejenige herkömmlicher Einrichtungen weit übertrifft. So weist das System gemäß Anspruch 12 eine ständige Funktionsselbstüberwachung mit einer Last- bzw. Netzabschaltung beim Auftreten eines Gerätefehlers auf. Gemäß Anspruch 13 ist eine redundante Spannungsversorgung vorgesehen, die auch bei Teilausfällen noch funktionsfähig bleibt. Gemäß Anspruch 14 sorgt ein Speicherkondensator selbst bei fehlerhafter Spannungsversorgung noch für eine sichere Abschaltung.

Mit den Mitteln von Anspruch 15 kann die Funktion des Potentialausgleichsleiters sicher überwacht werden. Dieser Vorgang kann - muß aber nicht - allstromsensitiv erfolgen. Auch mit den Mitteln von Anspruch 16 kann die Funktion des Potentialausgleichsleiters sicher überwacht werden.

Die bevorzugte Maßnahme von Anspruch 17, nämlich die Verwendung einer Digitalschnittstelle, wird erst durch die Verwendung der elektronischen Schaltungstechnik möglich und eröffnet gänzlich neue Möglichkeiten. Hierdurch können auch völlig andere, in anderem Zusammenhang bekannte sicherheitsrelevante Meßgrößen als weitere Abschaltkriterien genutzt werden. Dies gilt beispielsweise für den Isolationswiderstand des abgeschalteten Netzes oder für den Widerstand der Erdung in der Fehlerstrom-Schutzeinrichtung. Diese Kombination der nur von einem isolierten IT-Netz bekannten Isolationsüberwachung mit einer Fehlerstrom-Schutzeinrichtung (für geerdete und isolierte Netze einsetzbar) ist neu und führt zu überraschenden Kombinationswirkungen. Außerdem kann die neue Fehlerstrom-Schutzeinrichtung nunmehr die neue Aufgabe einer vorbeugenden Überwachung durch die Überwachung von Isolations-Verschlechterungen übernehmen. Dadurch besteht jetzt die Möglichkeit, einer sich anbahnenden Abschaltung durch vorgezogene Wartung oder Fehlersuche zuvorzukommen. Dieses gilt Insbesondere auch deshalb, weil gezielt der Fehlerstrom selektiert wird, der allein auf eine Anlageverschlechterung hinweist

Gemäß Anspruch 18 lassen sich die Einzelteile der Einrichtung zu verschiedenen Baumodulen zusammenfassen.

Anspruch 19 beinhaltet eine Möglichkeit der Realisierung eines allstromsensitiv arbeitenden Differenzstromsensors in Form eines Schwingungskreises.

Die Erfindung wird nachfolgend unter Bezugnahme auf mehrere zeichnerische Darstellungen näher erläutert. Es zeigen:

Fig. 1   in einem Blockschaltbild eine Einrichtung nach der vorliegenden Erfindung,

Fig. 2   in einem Blockschaltbild einen Synchrongleichrichter mit geschaltetem Vorzeichen zum Ermitteln eines Wirk- oder Fehlerstroms,

Fig. 3   in einem Blockschaltbild einen Synchrongleichrichter mit einem Multiplizierer zum Ermitteln eines Wirk- oder Fehlerstroms,

Fig. 4   in einem Blockschaltbild die Ermittlung eines Wirk- oder Fehlerstroms auf der Basis einer Wirkleistungsmessung,

Fig. 5   eine Einrichtung nach der vorliegenden Erfindung in einem vereinfachten Blockschaltbild und

Fig. 6   in einer Prinzipdarstellung ein Schaltungsbeispiel für einen allstromsensitiven Differenzstromsensor zum Erfassen von Wechselstrom- und Gleichstromkomponenten.

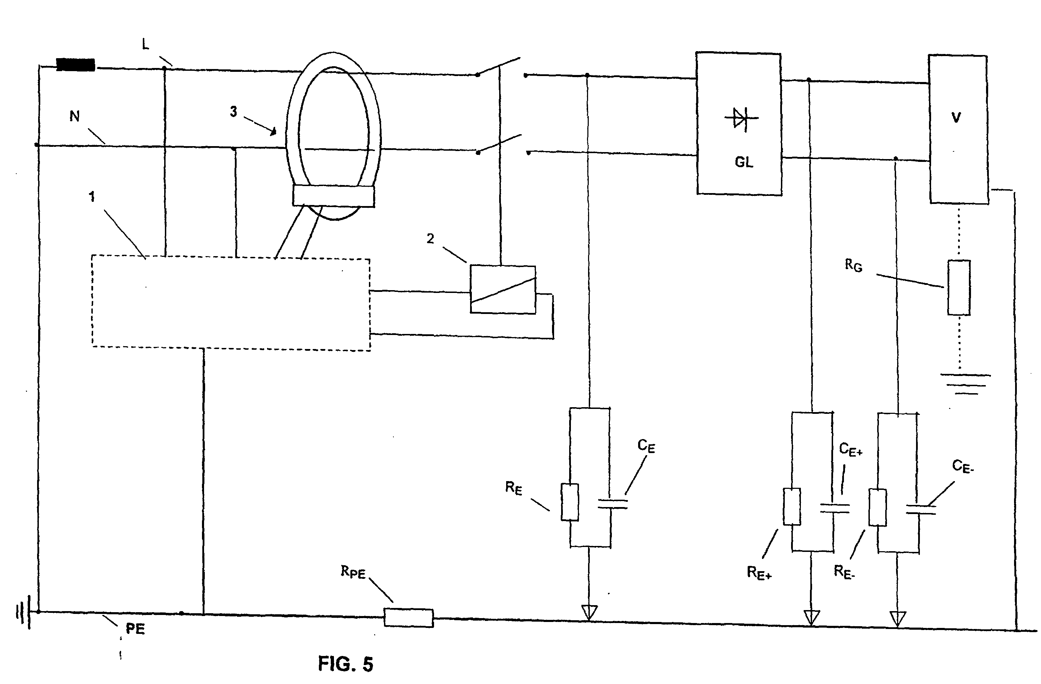

Zunächst wird das Prinzip der Erfindung an einem vereinfachten Blockschaltbild aus Fig. 5 allgemein beschrieben. Diese Figur zeigt ein geerdetes einphasiges Wechselstromnetz mit zwei Leitern - nämlich einem Netzleiter L und einem Neutralleiter N - sowie mit einem Potentialausgleichsleiter PE. $C_E$ sowie $R_E$ symbolisieren die natürlichen kapazitiven und die resistiven bzw. widerstandsbehafteten Netzableitungen (Netzableitimpedanzen) des Wechselstromnetzes (und einer eventuellen Gleichstromseite des Netzes). Das Wechselstromnetz ist über einen allpoligen, im vorliegenden Fall über einen zweipoligen, Trenn- bzw. Lastschalter 2 mit einem Verbraucher bzw. einer Last V in Form eines Verbraucher-Gerätes verbindbar. Diese Verbindung kann gemäß Darstellung unter Zwischenschaltung eines Gleichrichters GL erfolgen. Dabei symbolisieren $C_{E+}$ sowie $R_{E+}$ und $C_{E-}$ sowie $R_{E-}$ die natürlichen kapazitiven und die resistiven bzw. widerstandsbehafteten Netzableitungen (Netzableitimpedanz) der Gleichstromseite des Wechselstromnetzes. Das Gehäuse des Verbrauchers ist zusätzlich geerdet, was in der Figur mit dem Erdungswiderstand $R_G$ symbolisiert ist. Hierbei handelt es sich um den gesamten Erdungswiderstand aller im Netz vorhandenen Erdungen. Der Leitungswiderstand des Potentialausgleichsleiters PE ist mit $R_{PE}$ bezeichnet und liegt praktisch parallel zum Erdungswiderstand $R_G$.

Die beiden Leiter L und N sind durch einen Summenstromwandler oder Differenzstromsensor 3 geführt, der die vektorielle Summe der Ströme in den Leitern L und N bildet, also den Differenzstrom derselben. Dieser sollte möglichst klein sein und ist um so größer, je kleiner die Netzableitimpedanzen sind. Der Differenzstrom setzt sich aus ohmschen und kapazitiven Komponenten zusammen, wobei die ohmschen Komponenten den Fehlerstrom und die kapazitiven Komponenten den unvermeidbaren, insbesondere auch mit der Netzgröße ansteigenden kapazitiven Ableitstrom bilden.

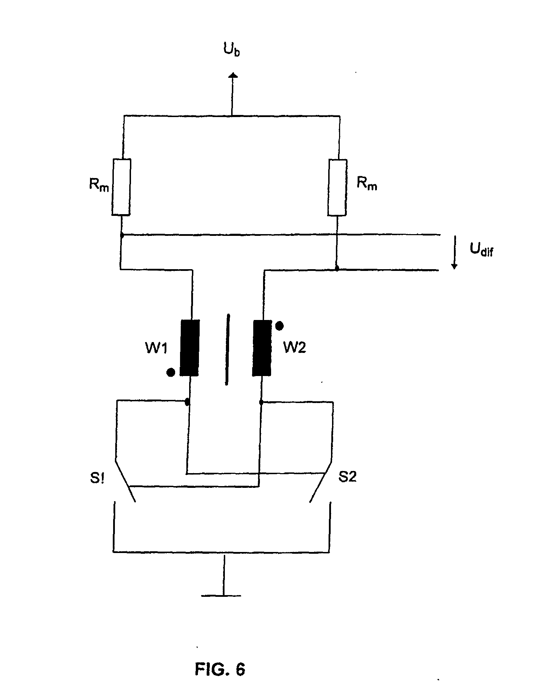

Der Differenzstrom kann - beispielsweise bei nachgeschalteten Gleichrichtern oder Wechselrichtern - zusätzlich zu reinen Wechselstromkomponenten auch Gleichstromkomponenten enthalten. Wenn der Differenzstromsensor auch die Gleichstromkomponenten erfassen soll, muß er allstromsensitiv ausgelegt sein. Solche allstromsensitiven Differenzstromsensoren sind an sich bekannt und können beispielsweise so arbeiten, wie es im Zusammenhang mit Fig. 6 beschrieben wird.

Der vom Differenzstromsensor 3 erfaßte Differenzstrom teilt sich bei vorhandenem Potentialausgleichsleiter PE auf und fließt über den Erdungswiderstand $R_G$ und über den Leitungswiderstand $R_{PE}$ des Potentialausgleichsleiters.

Gemäß Fig. 5 wird in einer Auswerteschaltung in Form eines netzgespeisten Differenzstrom- bzw. Fehlerstromrelais 1 zunächst einmal der Wechselstromanteil des Differenzstroms des Netzleiters L und des Neutralleiters N als eine erste Netzgröße erfaßt. Ferner wird in dem Differenzstrom- bzw. Fehlerstromrelais 1 die Netzwechselspannung zwischen dem Netzleiter L sowie dem Neutralleiter N oder anderen Leitern als eine zweite Netzgröße erfaßt. Dann kann in dem Differenzstromrelais 1 der Phasenwinkel φ zwischen den ersten und zweiten Netzgrößen bestimmt werden. Und schließlich wird in dem Differenzstromrelais 1 das Produkt zwischen der Amplitude des Wechselstromanteils des Differenzstroms und dem Kosinus des Phasenwinkels φ zwischen den beiden erfaßten Netzgrößen als Maß für den resistiven Fehlerstrom des Netzes ermittelt. Das Produkt kann aus den erfaßten Einzelgrößen direkt berechnet oder aber auch ohne eine solche Einzelerfassung (beispielsweise des Phasenwinkels φ) auf indirekte Weise ermittelt werden. Diese indirekte Ermittlung wird noch näher erläutert.

Ferner wird im Differenzstrom- bzw. Fehlerstromrelais 1 der Gleichstromanteil des allstromsensitiv erfaßbaren Differenzstroms ausgewertet und berücksichtigt, sofern der Differenzstromsensor 3 allstromsensitiv arbeitet. Dieser Gleichstromanteil ist immer als Fehlerstrom zu werten und kann auf quadratischem Wege zum wechselstromseitigen Fehlerstrom addiert werden. Er kann bei unterschiedlichen Grenzwerten für Wechselstrom und Gleichstrom auch in einer separaten Auswerteschaltung behandelt werden.

Das genannte Produkt zwischen der Amplitude des Wechselstromanteils des Differenzstroms und dem Kosinus des Phasenwinkels φ, also der wechselstromseitige resistive Fehlerstrom, wird - gegebenenfalls nach der quadratischen Addition des resistiven DC Fehlerstroms - mit einem vorgegebenen, gegebenenfalls einstellbaren, Grenz- bzw. Ansprechwert verglichen. Sobald und solange das Produkt diesen Wert übersteigt, steuert das Differenzstromrelais 1 ein Relais eines Leistungs- bzw. Lastschalters 2 an, der die Last V vom Wechselstromnetz allpolig trennt.

Fig. 1 zeigt in einer detaillierteren Darstellung insbesondere das Differenzstromrelais 1 aus Fig. 5 in Verbindung mit einem zu überwachenden Wechselstromnetz. Dieses kann geerdet (wie im vorliegenden Fall) oder ungeerdet sein - es kann sich um ein Einphasennetz oder ein Dreiphasennetz mit oder ohne direkt angeschlossene Gleichrichter oder Wechselrichter handeln. Durch das allstromsensitive Meßverfahren werden Differenzströme IΔ erfaßt, die aus natürlichen kapazitiven Ableitungströmen im AC- oder Wechselstromteil des Netzes bestehen und die auch Fehlerströme enthalten können, welche durch Isolationsfehler im AC- oder DC- Teil des Netzes entstehen.

Eine Einrichtung für ein dreiphasiges elektrisches Wechselstromnetz unterscheidet sich lediglich darin, daß das Netzteil aus allen 3 Phasen gespeist wird und daß die noch zu erläuternden Komponenten 7, 9, 12, 13, 18 für jede Phase einmal vorhanden sind.

Die Einrichtung erfaßt den Differenzstrom des Netzes, der ein Maß für die Impedanz des Netzes gegen Erde ist. Der Differenzstrom kann eine resistive Komponente (Fehlerstrom) enthalten, die durch ohmsche Isolationsfehler entsteht.

Die Einrichtung besteht im vorliegenden Fall im wesentlichen aus einem Differenz- und Fehlerstromrelais 1, einem allstromsensitiven Differenzstromsensor 3 zum Erfassen des Differenzstromes IΔ des Netzes, ferner einem zweiten Stromsensor 25 zum Erfassen des (Ableit-) Stromes im Potentialausgleichsleiter PE des Netzes und einem Leistungs- oder Lastschalter 2, der bei Überschreitung eines Grenzwertes des Fehlerstromes oder des gesamten Differenzstromes das Netz allpolig von der Einspeisung trennt.

Am Ausgang des Differenzstromsensors 3 (siehe Fig. 1) entsteht ein Meßsignal IΔ, das proportional zum Differenzstrom der durch den Sensor durchgeführten Leiter L, N ist und das die AC Komponente und gegebenenfalls auch die DC Komponente des Differenzstromes enthält. In einem Tiefpaß 10, der eine Grenzfrequenz unterhalb der Netzfrequenz hat, z.B. eine Grenzfrequenz von 10 Hz, wird die DC Komponente $If_{DC}$ separiert, die immer als ohmscher Fehlerstrom zu werten ist.

Über einen Hochpaß 11, der eine Grenzfrequenz oberhalb der Grenzfrequenz des Tiefpasses 10 hat, z.B. eine Grenzfrequenz von 15 Hz, wird die AC Komponente $I\Delta_{AC}$ des Differenzstromes $I\Delta$ ausgekoppelt. Anschließend durchläuft die AC Komponente $I\Delta_{AC}$ einen geeigneten frequenzbewertenden Tiefpaß 15, der die Frequenzabhängigkeit des menschlichen Körpers nachbildet. Es erfolgt also eine entsprechende Frequenzbewertung von $I\Delta_{AC}$. Der Tiefpaß 15 dient zur Nachbildung der Frequenzabhängigkeit des menschlichen Körpers in bezug auf die Berührungsempfindlichkeit gegenüber elektrischen Strömen (wie z. B: in IEC 60479 beschrieben).

Die AC Komponente $I\Delta_{AC}$ des Differenzstromes $I\Delta$ enthält (auch nach der Frequenzbewertung) den (natürlichen) kapazitiven Ableitstrom und einen eventuell vorhandenen resistiven Fehlerstrom $If_{AC}$. Beide Größen können mit Hilfe der Phasenbeziehung zwischen AC Differenzstrom und AC Netzspannung aus der ausgefilterten AC Komponente ermittelt werden. Hierzu gibt es verschiedene Möglichkeiten, die später noch näher erläutert werden.

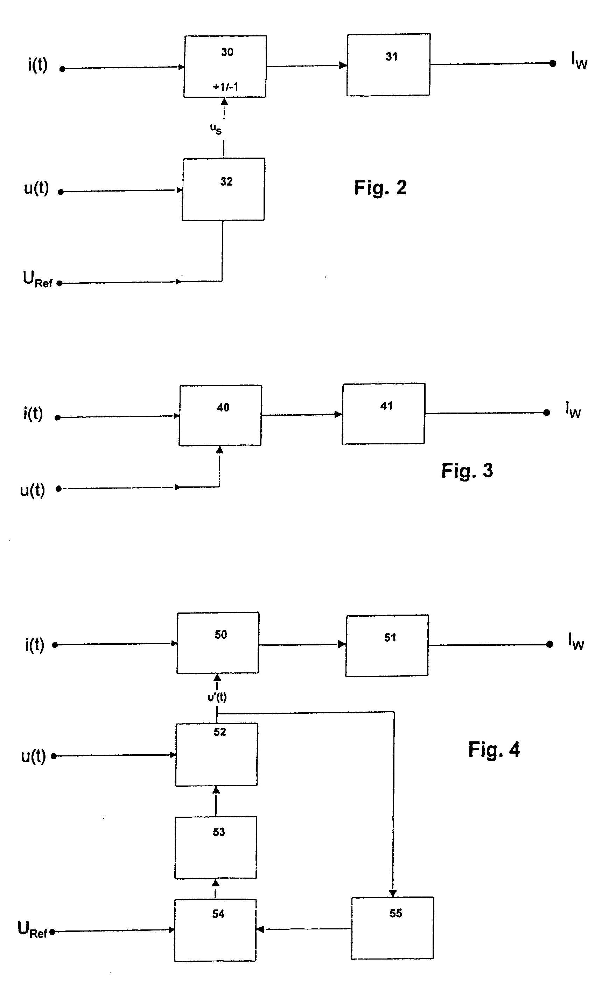

Im vorliegenden Fall wird zur Ermittlung von $If_{AC}$ über einen doppelphasig angekoppelten Spannungsteiler 7, 8, 9 zwischen dem Netz sowie dem Potentialausgleichsleiter PE und über ein Schaltungsteil 12 an dessen Ausgang eine Vergleichs- oder Ersatzspannung $U_{rms}$ erzeugt, die die Netzspannung U mit konstant gehaltenem Effektivwert repräsentiert. In einem Phasen-Modul 13 werden die Ersatzspannung $U_{rms}$ und die frequenzbewertete AC Komponente $I\Delta_{AC}$ des Differenzstromes $I\Delta$ so behandelt, daß am Ausgang die AC Komponente des resistiven Fehlerstroms $If_{AC}$ ansteht. Das bedeutet, daß im Phasen-Modul 13 auf indirekte Weise (also ohne Berechnung) das die Wirkkomponente repräsentierende Produkt zwischen der Amplitude des Wechselstromanteils $I\Delta_{AC}$ des Differenzstromes $I\Delta$ und dem Kosinus des Phasenwinkels φ ermittelt wird. Dieses Prinzip ist vorzugsweise auf eine Wirkleistungsmessung gestützt, setzt keine Einzelkenntnis des Phasenwinkels φ voraus und wird noch im Zusammenhang mit Fig. 4 näher erläutert.

Bei Bedarf kann im Phasen-Modul 13 neben dem resisitiven Fehlerstrom auch der Ableitstrom (als kapazitive Komponente der AC Komponente $I\Delta_{AC}$ des Differenzstromes $I\Delta$) ermittelt werden.

In einem Addierer-Modul 14 werden die resistive DC Komponente $If_{DC}$ und die resistive AC Komponente $If_{AC}$ durch quadratische Addition zu einem Gesamtfehlerstrom bzw. Gesamt-Fehlerstrom-Signal If zusammengefaßt. Das Fehlerstrom-Signal If und der unbehandelte gesamte Differenzstrom $I\Delta$ werden einem Vergleicher-Modul 19 zugeführt, das als diskrete Schaltung, Mikrocontroller oder ASIC ausgebildet sein kann.

Das Vergleicher-Modul 19 enthält zwei Einstellmittel 16, 17 zur Vorgabe eines kleineren Ansprech- oder Grenzwertes $If_g$ für das Fehlerstrom-Signal If und eines größeren Ansprech- oder Grenzwertes $I\Delta_g$ für den gesamten Differenzstrom $I\Delta$. Sobald einer der Ansprech- oder Grenzwerte überschritten wird, steuert das Vergleicher-Modul 19 über ein logisches ODER-Glied - ein OR Glied 21 - einen Schalter 22 an, der den Leistungs- oder Lastschalter 2 betätigt und die Netzabrennung durchführt.

Außer dem resistiven Fehlerstrom If, der für die Berührungssicherheit maßgeblich ist, ist auch der gesamte Ableitstrom, also auch der gesamte Differenzstrom $I\Delta$, ein Maß für den sicheren Zustand des Netzes. Für die Betriebssicherheit eines elektrischen Netzes ist es sinnvoll, die Scheinleistung durch den gesamten Differenzstrom zu überwachen. Dazu darf der Differenzstrom $I\Delta$ nicht wie der Wechselstromanteil $I\Delta_{AC}$ des Differenzstromes $I\Delta$ über einen Tiefpaß frequenzbewertet werden.

Durch das getrennte Vergleichen des resistiven Fehlerstroms If mit einem ersten kleineren Ansprech- oder Grenzwert $If_g$ von z.B. 30 mA und des gesamten Differenzstroms $I\Delta$ mit einem zweiten größeren Ansprech- oder Grenzwert $I\Delta_g$ von z.B. 300 mA kann man einen Personenschutz und einen Anlagenschutz in einer Einrichtung kombinieren.

Die Vorgabe der Ansprech- oder Grenzwerte kann fest oder variabel sein. Sie können auch flexibel an den jeweiligen Anlagenzustand angepaßt werden. Beispielsweise ist ein Kriterium für die Berührbarkeit von Teilen einer elektrischen Anlage die sogenannte Berührungsspannung. International wurde ein maximaler Grenzwert von AC 50V bzw. von DC 120V festgelegt, der auch bei andauernder Belastung unschädlich ist. Um diesen Grenzwert einzuhalten, muß das Produkt aus Ableitstrom und Gesamterdungswiderstand $R_{erdung}$ ($R_{erdung}$ = Parallelschaltung von $R_G$ und $R_{PE}$) im Betrieb jeweils kleiner als eine der oben angegebenen Spannungen sein. Die Einhaltung dieser Bedingung wird bei der Inbetriebnahme eines elektrischen Netzes, bei einer Installation sowie in regelmäßigen Abständen meßtechnisch überprüft.

Schließt man über eine Digitalschnittstelle 20, 23 ein Zusatzgerät an, das den Gesamterdungswiderstand im Betrieb kontinuierlich mißt und den aktuellen Meßwert über die Digitalschnittstefle an die Fehlerstromschutzeinrichtung überträgt, können die Grenzwerte für den Ableitstrom durch die folgenden Berechnungen gebildet werden:

$$I\Delta_{gAC} = 50V / R_{erdung}$$

$$I\Delta_{gDC} = 120V / R_{erdung}$$

Der niederohmige Potentialausgleichsleiter PE, dessen Leitungswiderstand mit $R_{PE}$ symbolisiert ist, stellt in einem elektrischen System ohne Fehler sicher, daß die Berührungsspannung und damit der Berührungsstrom unterhalb zulässiger Werte bleiben. Bei einer Unterbrechung des Potentialausgleichsleiters PE kann jedoch der natürliche Ableitstrom des Netzes zum Fehlerstrom werden. Das gilt z.B für eine Person, die Erdberührung hat und die ein im Normalfall geerdetes Teil des elektrischen Netzes berührt. Dieses Teil kann durch die PE Unterbrechung eine höhere Berührungsspannung annehmen, wodurch ein gefährlicher Fehlerstrom entstehen kann.

In diesem Falle einer Unterbrechung des Potentialausgleichsleiters PE kann der Fehlerstrom nahezu rein kapazitiv sein und durch die zuvor beschriebenen Teile der Einrichtung nicht erkannt werden. Um das Netz auch in diesem Falle sicher abschalten zu können, kann zusätzlich der Strom $I\Delta_{PE}$ im Potentialausgleichsleiter PE über den Stromwandler oder Differenzstromsensor 25 erfaßt und über ein zur Meßwertanpassung dienendes Schaltungsteil 24 dem Vergleicher-Modul 19 zugeführt werden.

Zusätzlich zur Erdung der berührbaren Teile des elektrischen Systems kann eine zusätzliche Erdung dieser Teile über den leitfähig mit Erde verbundenen Standort oder über andere leitfähige mechanische Verbindungen (z.B. Wasserleitungen zur Kühlung) vorhanden sein. Der sich aus dieser zusätzlichen Erdung ergebende Erdungswiderstand ist mit $R_G$ bezeichnet.

Der mit dem Differenzstromsensor 3 erfaßte Gesamtdifferenzstrom umfaßt die Summe der beiden Ströme $I\Delta_{PE}$ und $I\Delta_G$. Dabei ist der im Schutzleiter oder Potentialausgleichsleiter PE gemessene Strom $I\Delta_{PE}$ proportional zum gesamten Differenzstrom $I\Delta$ nach der Beziehung $I\Delta_{PE} = I\Delta - I\Delta_G$. Im Betrieb eines Netzes kann man ein konstantes Verhältnis zwischen dem Widerstand $R_{PE}$ des Potentialausgleichsleiters und dem Widerstand $R_G$ der zusätzlichen Erdung voraussetzen. Damit zeigt sich eine Änderung des Gesamtdifferenzstromes immer als proportionale Änderung des Stromes im Potentialausgleichsleiter. Diese Tatsache kann benutzt werden, um auch dann das Netz sicher abzuschalten, wenn durch Ausfall des Potentialausgleichsleiters PE der Ableitstrom zum Fehlerstrom wird.

Zusätzlich ist es möglich, über einen nicht dargestellten zweiten Stromwandler, durch den der Potentialausgleichsleiter PE gesteckt wird, einen kleinen Strom in die Schleife von $R_{PE}$ und $R_G$ einzuprägen und über einen nicht dargestellten dritten Stromwandler, durch den der PE ebenfalls gesteckt wird,.den Schleifenwiderstand aus der Reihenschaltung der beiden Widerstände $R_{PE}$, $R_G$ zu überwachen.

Bei einer Fehlerstromschutzeinrichtung sollte eine möglichst hohe Zuverlässigkeit und Funktionssicherheit vorausgesetzt werden. Herkömmliche Einrichtungen besitzen hierzu eine Prüftaste, die regelmäßig betätigt werden sollte, um die Verfügbarkeit der Schutzmaßnahme zu prüfen. In der Regel wird diese notwendige Überprüfung jedoch äußerst selten durchgeführt.

Dies führt dazu, daß die elektromagnetisch betätigten herkömmlichen Fehlerstrom-Schutzschalter im Fehlerfalle oft nicht mehr auslösen.

Die hier beschriebene Einrichtung besitzt mehrere Überwachungsmechanismen, die die Funktionssicherheit sicherstellen. Da es sich um eine netzspannungsabhängige Einrichtung handelt, muß sichergestellt werden, daß über den Grenzwerten liegende Fehlerströme immer zum Abschalten des Netzes führen und daß auch dann abgeschaltet wird, wenn in der Einrichtung Funktionsfehler auftreten, die dazu führen könnten, daß im Fehlerfalle nicht abgeschaltet würde. Diese Aufgabe wird durch die folgenden Maßnahmen gelöst:: Die Versorgung des Differenz- und Fehlerstromrelais erfolgt bei dreiphasigen Netzen redundant. Damit ist sichergestellt, daß bei Phasenausfall oder Neutralleiterausfall die Einrichtung weiterarbeitet, solange noch zwei Phasen oder eine Phase und der Neutralleiter zur Verfügung stehen.

Zur Sicherstellung der Schutzfunktion auch dann, wenn alle Phasen bis auf eine Phase ausfallen oder wenn im Einphasensystem der Neutralleiter ausfällt, wird aus der Versorgungsgleichspannung eines netzgespeisten internen Netzteiles 4 über eine Entkopplungsdiode 6 ein Speicherkondensator 5 aufgeladen. Aus diesem Speicherkondensator werden über Us die Schaltungsteile 18, 21, 22 bei Ausfall der internen Versorgungsspannung für eine Zeitspanne redundant versorgt. Während dieser Zeitspanne wird über den Spannungsteiler 7, 8 ,9 festgestellt, ob noch ein Netzleiter Spannung gegen Erde führt. Wenn das zutrifft, wird der Leistungsschalter 2 über das exclusive Oder-Glied (EXOR) 18, ferner über das Oder-Glied (OR) 21 und über den Schalter 22 mit der Energie aus dem Speicherkondensator 5 ausgelöst. Wenn zum Beispiel das gesamte Netz abgeschaltet wird, erfolgt wegen der EX-OR Verknüpfung keine Abschaltung des Leistungsschalters 2.

Eine Überprüfung des Anschlusses der Differenzstromwandler kann bei dem allstromsensitiven Meßverfahren auch einfach dadurch vorgenommen werden, daß das Vorhandensein der Schwingung am Sensor überwacht wird und bei Veränderung der Schwingfrequenz oder Abriß der Schwingung ein Defekt erkannt wird.

Um sicherzustellen, daß der Leistungsschalter 2 auch tatsächlich angeschlossen ist, wird dessen Spulenwiderstand mit Hilfe eines kleinen überlagerten Gleichstromes kontinuierlich gemessen. Mit der gleichen Maßnahme wird der Anschluß der Differenzstromwandler 3 und 25 kontinuierlich geprüft.

An die Digitalschnittstelle 20,23 kann eine Isolationsüberwachungseinrichtung angeschlossen werden, die das zu überwachende Netz im abgeschalteten Zustand auf dessen Isolationswiderstand überwacht und die ein Einschalten des Leistungsschalters 2 verhindert, wenn der Isolationswiderstand einen vorgegebenen Wert unterschreitet. Dadurch wird ein Wiedereinschalten des Netzes solange verhindert, bis der Isolationswiderstand wieder einen akzeptablen Mindestwert hat. An die Digitalschnittstelle 20,23 kann ferner eine schon erwähnte Einrichtung zur Überwachung des Widerstandes $R_{PE}$ des Potentialausgleichsleiters PE sowie eine Einrichtung zur Anzeige oder digitalen Weiterverarbeitung der Meßdaten der Einrichtung angeschlossen werden.

Der resistive AC Fehlerstrom If$_{AC}$ ist ein Wirkstrom $I_W$. Dieser entspricht dem Produkt zwischen der Amplitude des Wechselstromanteils des Differenzstromes und dem Kosinus des Phasenwinkels φ und kann direkt berechnet oder indirekt ermittelt werden.

Beim direkten Berechnen dieses Wirkstroms $I_W$ wird unter Einsatz von Komparatoren und Zeitmessern die Phasenlage φ zwischen dem Wechselstromanteil i (t) = I$\Delta_{AC}$ (t) des Differenzstroms I$\Delta$ (t) und der Netzwechselspannung u (t) ermittelt. Möglich ist zum Beispiel die Auswertung der Nulldurchgänge und der Steigungsrichtung. Bestimmt wird als ein Parameter die Periodendauer T der Netzwechselspannung durch eine Zeitmessung zwischen zwei Nulldurchgängen mit gleichem Steigungsvorzeichen. Als ein zweiter Parameter wird die Zeit t zwischen einem Nulldurchgang der Netzwechselspannung u (t) und dem darauffolgenden Nulldurchgang des Wechselstromanteils I$\Delta_{AC}$ (t) - mit gleichem Steigungsvorzeichen - bestimmt. Der Phasenwinkel φ wird dann aus der Formel φ = t · 2 · π / T berechnet. Nach Ermittlung der Amplitude des Wechselstromanteils I$\Delta_{AC}$ (t) des Differenzstroms I$\Delta$ (t) (beispielsweise über eine Spitzenwertmessung) kann der Wirkstrom $I_W$, also der wechselstromseitige resistive Fehlerstrom If$_{AC}$, aus folgender Formel berechnet werden:

$$I_W = \hat{\imath} \cdot \cos(\varphi)$$

Im Dreiphasennetz ist die Bestimmung des Phasenwinkels φ und die Berechnung nach Gleichung 2 für jede Netzphase einzeln durchzuführen; die Einzelergebnisse sind entweder quadratisch zu summieren oder es wird das Einzelergebnis mit dem größten Betrag als Endergebnis übernommen.

Praktisch verwendbar ist dieses Verfahren des direkten Berechnens des Wirkstroms $I_W$ nur für möglichst sinusförmige Signale. Mit zunehmenden Oberwellen- und Rauschanteilen sind die Bestimmung des richtigen Nulldurchgangs und die damit verbundene Ermittlung des Phasenwinkels nur mit großen Fehlern möglich.

Unter Bezugnahme auf die Fig. 2 bis 4 werden nachfolgend drei Methoden zur indirekten Ermittlung (also ohne Berechnung) des wechselstromseitigen resistiven Fehlerstroms If$_{AC}$, also des Wirkstroms $I_W$, beschrieben.

In Fig. 2 entsprechen i (t) dem Ableitstrom bzw. dem Wechselstromanteil i (t) = I$\Delta_{AC}$ (t) des Differenzstroms I$\Delta$ (t) und u (t) der Netzwechselspannung. Die Referenzspannung U$_{Ref}$ eines Komparators 32 wird im folgenden mit 0 V festgelegt. Ist die Netzwechselspannung größer 0 V, so steuert die Ausgangsspannung U$_S$ des Komparators ein geschaltetes Koeffizientenglied 30 so, daß der Wechselstromanteil oder wechselstromseitige Ableitstrom mit einem konstanten Koeffizienten von z.B. +1 multipliziert wird. Wird die Netzwechselspannung kleiner 0 V, so stellt sich die Ausgangsspannung des Komparators 32 so ein, daß der für i (t) wirksame Koeffizient den gleichen Betrag und aber ein wechselndes Vorzeichen, also z.B. -1 , erhält. Ein Tiefpaß 31 bildet im Idealfall den arithmetischen Mittelwert des Ausgangssignals des Koeffizientenglieds 30 über eine Periode von u (t).

Das Ausgangssignal dieses Synchrongleichrichters entsteht somit aus einer Faltung des wechselnden Koeffizienten (Rechteck mit der Amplitude +/-1) und dem Ableitstrom i (t). An jeder Spektrallinie des Koeffizientenrechtecks wird ein Signalanteil des Eingangssignals, bewertet mit der Amplitude der Spektrallinie, als Ausgangssignalanteil erscheinen. Dies bedeutet, daß bei einem Koeffizientenrechteck mit der Amplitude 1 alle ungeradzahligen Frequenzanteile von i (t) wie folgt bewertet werden:

$$\bar{I}_a = \frac{2}{\pi \cdot m} \hat{\imath} \cdot \cos(\varphi_m)$$

für alle m= 2*n+1 und n=0,1,2,3...

Ideal werden alle Signalanteile von i(t) unterdrückt, die nicht dem ungeradzahligen Vielfachen der Frequenz von u(t) entsprechen. Auch DC-Anteile werden unterdrückt. Dies bedeutet, daß Oberwellenanteile in i(t) zu höheren Frequenzen entsprechend der spektralen Anteile eines symmetrischen Rechtecks nur abgeschwächt berücksichtigt werden.

Neben dieser Frequenzselektivität besteht die phasenbewertende Eigenschaft über den Term cos(φ) in der obigen Gleichung.

Sind u(t) und i(t) synchrone Signale mit 0° Phasenverschiebung und ist i(t) ein rein sinusförmiger Wechselstrom, so gilt m=1, cos (φ) = 1, und aus der obigen Gleichung wird:

$$\bar{I}_a = \frac{2}{\pi} \cdot \hat{\imath}$$

Dies entspricht dem arithmetischen Mittelwert eines vollweggleichgerichteten Signals. Sind u(t) und i (t) synchrone Signale mit 90° Phasenverschiebung und ist i(t) ein reiner sinusförmiger Wechselstrom , so gilt m=1 , cos (φ) = 0, und aus der obigen Gleichung wird I$_a$=0. Das bedeutet, daß kapazitive Anteile im Ableitstrom (90° Phasenverschiebung) unterdrückt werden.

Der Vorteil dieses Verfahrens gemäß Fig. 2 gegenüber dem Verfahren zur direkten Berechnung besteht darin, daß ein Rauschen und Störsignale im Ableitstrom gut unterdrückt werden. Empfindlich reagiert dieses Verfahren jedoch auf Rauschen und Störsignale in u(t). Oberwellenanteile in i(t) werden zwar berücksichtigt, gehen aber falsch bewertet in das Ergebnis ein.

Im Dreiphasennetz ist für jede Netzphase ein Synchrongleichrichter zu verwenden. Als Ergebnis dient entweder die quadratische Summe aller Ausgangssignale oder das Ausgangssignal mit dem größten Betrag.

In Fig. 3 entspricht i (t) ebenfalls dem Ableitstrom bzw. dem Wechselstromanteil i (t) = I$\Delta_{AC}$ (t) des Differenzstroms I$\Delta$ (t). Ein Tiefpaß 41 hat die gleiche Funktion wie der Tiefpaß 31 aus Fig. 2. Wird für das Signal u (t) ein symmetrisches, synchron zur Netzwechselspannung verlaufendes Rechtecksignal mit der Amplitude 1V und einem DC-Anteil von 0V gewählt, so entspricht das Verhalten der Schaltung exakt der Schaltung von Fig. 2. Ist u (t) hingegen eine rein sinusförmige, netzsynchrone Spannung mit konstanter Amplitude ohne DC-Anteil, so wird von dieser Schaltung nur die Grundwelle des Signals i (t) phasenbewertet. DC-Anteile, Oberwellen, Rauschen oder Störsignale werden unterdrückt.

Mit der vorausgesetzten 1V Amplitude von u (t) und dem Einsatz eines faktorlosen Multiplizierers 40 bestimmt sich der Wirkstrom I$_W$ für die netzfrequente Grundwelle von i (t) zu:

$$I_W = \frac{1}{2} \cdot \hat{i} \cdot \cos(\varphi)$$

Bis auf den Faktor 1/2 entspricht diese Gleichung derjenigen, die im Zusammenhang mit der direkten Berechnung erwähnt wurde. Hier wird also ebenfalls cos(φ) zur Ermittlung des Wirkstroms I$_W$ genutzt, ohne φ oder cos(φ) als Wert zu kennen.

Ein Nachteil des Verfahrens ist die Einschränkung auf die Auswertung der Grundwelle von i (t). Vorteilhaft ist die Unempfindlichkeit gegenüber Störspannungen und Rauschen. Auch in u (t) vorhandenes Rauschen ist nicht so kritisch wie bei den vorher beschriebenen Verfahren.

In Fig. 4 entsprechen i (t) dem Ableitstrom bzw. dem Wechselstromanteil i (t) = I$\Delta_{AC}$ (t) des Differenzstroms I$\Delta$ (t) und u (t) der Netzwechselspannung. Die Funktionsblöcke 52 bis 55 erzeugen aus der Netzspannung u (t) deren Abbild u' (t) mit konstant gehaltenem Effektivwert. Dabei sind folgende Funktionsblöcke vorgesehen: Multiplizierer 50, Tiefpaß 51, einstellbarer Abschwächer 52, Regelverstärker 53, Differenz-Bildner 54, RMS-Wert-Bildner 55.

Würde u (t) direkt mit i (t) multipliziert, so ist das Ergebnis p (t), nämlich die in den Ableitimpedanzen umgesetzte Momentanleistung. Wird p (t) über ganzzahlige Vielfache einer Netzperiode integriert (Tiefpaß 51), so ergibt das die in den Ableitimpedanzen umgesetzte Wirkleistung P.

$$P = \frac{1}{T} \cdot \int_{-n \cdot T} i(t) \cdot u(t) \, \mathrm{dt}$$

Wird der Term u (t) nun zu u' (t) mit konstantem RMS-Wert (Effektivwert), so entspricht das Ergebnis aus Multiplikation und Integration dem Strom, der ursächlich für die in den Ableitimpedanzen umgesetzte Leistung ist, also dem Wirkstrom I$_w$.

$$I_W = \frac{1}{T} \cdot \int_{-n \cdot T} i(t) \cdot \frac{u(t)}{U_{RMS}} \, \mathrm{dt}$$

Die korrekte Erfassung aller in i (t) vorhandenen Wirkkomponenten erfolgt theoretisch so breitbandig, wie die verwendeten Schaltkreise dieses zulassen, also einschließlich aller Gleich- und Oberwellenanteile. Eine korrekte Erfassung der Gleichanteile ist jedoch dadurch beeinträchtigt, daß in der praktischen Realisierung nicht die den Ableitstrom treibende Quellspannung als u (t) zum Einsatz kommt, sondern die Netzspannung als ein Abbild hiervon.

Im Dreiphasennetz ist die Schaltung von Fig. 4 für jede Netzphase aufzubauen. Als Ergebnis dient entweder die quadratische Summe aller Ausgangssignale oder das Ausgangssignal mit dem größten Betrag.

Fig. 6 zeigt das Prinzip eines Ausführungsbeispiels eines allstromsensitiv arbeitenden Differenzstromsensors, der AC und DC Komponenten eines Differenzstroms erfassen kann. Zur wechseistrom- und pulstromsensitven Differenzstrommessung werden überlicherweise Summenstromwandler eingesetzt, die die Meßgröße nach dem transformatorischen Prinzip erfassen. Differenzgleichströme lassen sich mit dieser Meßmethode nicht erfassen, da Gleichströme die zur Transformation erforderliche Flußänderung nicht verursachen.

Eine Möglichkeit zur Messung der Differenzgleichströme ist die Auswertung der Magnetisierung eines Eisenkernes (Flußdichte B). In bekannter Weise gibt die Magnetisierungskennlinie (B-H-Kennlinie) die Abhängigkeit der Flußdichte B eines weichmagnetischen Materials von der magnetischen Feldstärke H an. Der Verlauf der Magnetisierungskennlinie ist dabei grundsätzlich nullpunktsymmetrisch.

Der Differenzstrom erzeugt bei einem Summenstromwandler die magnetische Feldstärke H , die abhängig von der Windungszahl der stromdurchflossenen Wicklung und von der mittleren Weglänge des Magnetkernes ist. Diese magnetische Feldstärke erzeugt im Magnetkern einen magnetischen Fluß B, aus dem in Abhängigkeit der Querschnittsfläche des Magnetkernes die Flußdichte B gebildet werden kann. Ist der Differenzstrom null, ist die Flußdichte B ebenfalls null (bei Vernachlässigung von Hystereseffekten) . Wird der Magnetkern des Summenstromwandlers beispielsweise mit einem Differenzgleichstrom magnetisiert, entsteht aufgrund der magnetischen Feldstärke H eine Flußdichte B, die von dem verwendeten Kernmaterial abhängt.

Fig. 6 zeigt ein Schaltungsprinzip zur Erfassung auch von Differenzstromgleichströmen. Grundlage der Messung ist ein Schwingkreis, wobei der Summenstromwandler als schwingungserzeugendes Element dient. Gemäß Fig. 6 besteht der Summenstromwandler aus zwei entgegengesetzt aufgebrachten Wicklungen W1 und W2 mit gleicher Windungszahl. Die elektronischen Schalter S1 und S2 (beispielsweise Transistoren) des Oszillators sind abwechselnd geschlossen, so daß beide Wicklungen auch abwechselnd Strom führen. Aufgrund der entgegengesetzt aufgebrachten Wicklungen wird der Magnetkern abwechselnd in beiden Richtungen magnetisiert, so daß die Magnetiserungskennlinie in beiden Richtungen vollständig durchlaufen wird. Die Schaltung kippt, wenn der Magnetkern durch den Wicklungsstrom gesättigt wird. Bei Sättigung des Magnetkernes findet keine Stromänderung des Wicklungsstromes statt (Induktivität der Wicklung wird vernachlässigbar klein), so daß auch keine Spannung an den Steuereingang des durchgeschalteten Schalters induziert werden kann. Deshalb öffnet dieser Schalter. Das öffnen des Schalters führt dazu, daß am Steuereingang des bisher geöffneten Schalters die Spannung $U_b$ (feste Versorgungsgleichspannung) entsteht, zu der sich eine Induktionsspannung der jetzt abgeschalteteten Wicklung bildet. Daraufhin schließt der bisher geöffnete Schalter.

Aufgrund der abwechselnd schließenden Schalter, führt der Stromfluß zu einem Spannungsabfall an den Meßwiderständen $R_m$, dessen Frequenz der Schwingfrequenz entspricht. Durch Differenzbildung beider Spannungsabfälle werden die beide Zweige des Oszillators ausgewertet. Die Differenzspannung $U_{dif}$ kann prinzipiell als Rechteckspannung betrachtet werden. Das Tastverhältnis beträgt 50%, wenn kein Differenzstrom fließt, da jeweils die gleiche Zeit bis zum Erreichen des Sättigungspunktes (Kipp-Punkt des Schwingkreises) ausgehend vom Nullpunkt der Magnetiserungskennlinie benötigt wird.

Wie schon erwähnt, führt ein Differenzgleichstrom zu einer Vormagnetisierung des Magnetkernes. Die Sättigung wird in der vormagnetisierten Richtung zeitlich schneller erreicht als in umgekehrter Richtung ausgehend vom Nullpunkt der Magnetiserungskennlinie. Das Tastverhältnis ist nun ungleich 50%. Solange der Differenzstrom den Summenstromwandler nicht sättigt, kann weitgehend von einer linearen Abhängigkeit von Differenzstrom und Tastverhältnis der Spannung $U_{dif}$ gerechnet werden. Die Differenzbildung beider Spannungsabfälle führt dazu, daß das Tastverhältnis doppelt so groß wird wie bei Auswertung eines Oszillatorzweiges.

Aufgrund der Nullpunktsymmetrie des Magnetkernes ist das Schaltungsprinzip aus Fig. 6 auch für Differenzwechselströme geeignet. Ein Differenzwechselstrom "moduliert" ebenfalls die Magnetisierungs-Rechteckspannung; solange die Frequenz des Differenzstroms kleiner als die halbe Frequenz der Rechteckspannung ist, erfolgt eine korrekte Auswertung.

Dieses Schatungsprinzip kann daher als allstromsensitives Meßprinzip eingesetzt werden, wobei die AC und DC Komponenten des Differenzstroms aus der Rechteckspannung $U_{dif}$ durch einen Tiefpaß zurückgewonnen werden können. Das geschilderte Prinzip kann abgewandelt werden. Beispielsweise wäre es möglich, nur eine Wicklung zu benutzen, die mit einer ständig umgepolten Gleichspannung den Magnetkern positiv und negativ umpolt.

## Patentansprüche

1. Verfahren zur Isolations- und Fehlerstromüberwachung in einem elektrischen Wechselstromnetz, wobei in diesem der durch vektorielle Addition gebildete Differenzstrom zwischen zumindest zwei Netzleitern des Netzes erfaßt wird, wobei ferner das Produkt zwischen der Amplitude des Wechselstromanteils des Differenzstromes und dem Kosinus des Phasenwinkels $\varphi$ zwischen dem Wechselstromanteil des Differenzstromes sowie der Netzwechselspannung zwischen zumindest zwei Leitern des Netzes als Maß für den resistiven Fehlerstrom des Netzes ermittelt wird und wobei die Lastabschaltung dann durchgeführt wird, wenn der resistive Fehlerstrom einen bestimmten Ansprechwert übersteigt,
**dadurch gekennzeichnet,**
**daß** der Wechsel- und Gleichstromanteile enthaltende Differenzstrom ($I\Delta$) des Wechselstromnetzes allstromsensitiv erfaßt wird,
**daß** der kapazitive sowie resistive Komponenten enthaltende Wechselstromanteil des allstromsensitiv erfaßten Differenzstromes durch eine Hochpaßfilterung (11) mit einer unterhalb der Netzfrequenz liegenden ersten Grenzfrequenz gewonnen wird,
**daß** der als resistives Fehlerstromsignal zu wertende Gleichstromanteil des all-stromsensitiv erfaßten Differenzstromes durch eine Tiefpaßfilterung (10) mit einer unterhalb der ersten Grenzfrequenz liegenden zweiten Grenzfrequenz gewonnen wird,
**daß** der Wechselstromanteil des Differenzstroms nach der Hochpaßfilterung für einen Personenschutz durch eine Tiefpaßfilterung (15) frequenzabhängig bewertet wird,
**daß** das Produkt zwischen der Amplitude des Wechselstromanteils des Differenzstromes und dem Kosinus des Phasenwinkels φ durch eine Wirkleistungsmessung (12, 13) indirekt ermittelt wird, **daß** bei dieser Wirkleistungsmessung eine Multiplikation des Wechselstromanteils des Differenzstromes mit einem Multiplikationssignal und eine anschließende arithmetische Mittelwertbildung durchgeführt werden, wobei das Multiplikationssignal der bezüglich ihres Effektivwertes konstant gehaltenen Netzwechselspannung entspricht, **daß** das gleichstromseitige resistive Fehlerstromsignal und das aus dem Wechselstromanteil ermittelte wechselstromseitige resistive Fehlerstromsignal zum Ermitteln eines resistiven Gesamtfehlerstromsignals bzw. Gesamtfehlerstroms (If) einer quadratischen Addition (14) unterworfen werden und **daß** die Lastabschaltung dann durchgeführt wird, wenn das resistive Gesamtfehlerstromsignal einen bestimmten Ansprechwert übersteigt.

2. Verfahren nach Anspruch 1, **dadurch gekennzeichnet, daß** der ermittelte resistive Gesamtffehlerstrom (If) mit einem für einen Personenschutz geeigneten kleineren Ansprechwert (If$_g$) verglichen wird,
daß der erfaßte gesamte Differenzstrom (I$\Delta$), der Wechselstromkomponenten enthält und zusätzlich Gleichstromkomponenten enthalten kann, mit einem für einen Anlagenschutz geeigneten größeren Ansprechwert (I$\Delta_g$)verglichen wird
und daß eine Last- bzw. Netzabschaltung (2) dann durchgeführt wird, wenn zumindest einer der Ansprechwerte überschritten wird.

3. Verfahren nach Anspruch 2, **dadurch gekennzeichnet, daß** der kleinere Ansprechwert (If$_g$) und/ oder der größere Ansprechwert (I$\Delta_g$) einstellbar sind.

4. Verfahren nach Anspruch 3, **dadurch gekennzeichnet, daß** der kleinere Ansprechwert (If$_g$) für den Personenschutz an die im Betrieb vorhandenen Netzverhältnisse flexibel angepaßt wird, wobei der ohmsche Erdungswiderstand gemessen wird und wobei der Ansprechwert so eingestellt wird, daß er dem Quotienten aus der maximal zulässigen Berührungsspannung und dem ohmschen Erdungswiderstand entspricht.

5. Verfahren nach einem der Ansprüche 1 bis 4 für ein Wechselstromnetz mit einem Potentialausgleichsleiter, **dadurch gekennzeichnet, daß** zur Überprüfung der Funktion des Potentialausgleichsleiters der im Normalfall als bestimmter Anteil des gesamten Differenzstroms durch den Potentialausgleichsleiter fließende Strom erfaßt wird und daß dann eine Last- bzw. Netzabschaltung erfolgt, wenn dieser Strom kleiner als der bestimmte Anteil wird.

6. Verfahren nach einem der Ansprüche 1 bis 4 für ein Wechselstromnetz mit einem Potentialausgleichsleiter, **dadurch gekennzeichnet, daß** zur Überprüfung der Funktion des Potentialausgleichsleiters in diesen ein Prüfstrom eingekoppelt wird, daß dieser im Normalfall den Potentialausgleichsleiter und den ohmschen Erdungswiderstand durchfließende Prüfstrom erfaßt wird und daß dann eine Last- bzw. Netzabschaltung erfolgt, wenn eine Erhöhung des Gesamterdungswiderstandes über einen zulässigen Wert erkennbar ist.

7. Verfahren nach einem der Ansprüche 1 bis 6, **dadurch gekennzeichnet, daß** zum Überwachen eines dreiphasigen elektrischen Wechselstromnetzes mit oder ohne Neutralleiter das Verfahren für jeden der drei Netzleiter getrennt durchgeführt wird, indem der Wechselstromanteil des Differenzstroms aller drei Netzlei2 ter als erste Netzgröße erfaßt wird, indem ferner die drei Netzwechselspannungen zwischen jedem Netzleiter sowie einem Neutralleiter oder beim Fehlen desselben zwischen jedem Netzleiter und einem Potentialausgleichsleiter erfaßt werden und indem die entsprechenden drei Produkte zwischen der Amplitude des Wechselstromanteils des Differenzstroms sowie den Kosinuswerten der drei Phasenwinkel φ ermittelt werden, wobei die Lastabschaltung dann durchgeführt wird, wenn eines dieser Produkte den bestimmten Ansprechwert übersteigt.

8. Verfahren nach einem der Ansprüche 1 bis 7, **dadurch gekennzeichnet, daß** die Last- bzw. Netzabschaltung (2) allpolig durchgeführt wird.

9. Verfahren nach einem der Ansprüche 1 bis 8, **dadurch gekennzeichnet, daß** nach einer durch den Differenzstrom oder Fehlerstrom bedingten Last- bzw. Netzabschaltung oder einer sonstigen Netzabschaltung der Isolationswiderstand des abgeschalteten Netzes gemessen und mit einem den Normalfall repräsentierenden Grenzwert verglichen wird, und daß eine Wiedereinschaltung nur dann erfolgt, wenn der gemessene Isolationswiderstand des Netzes den Grenzwert übersteigt.

10. Einrichtung zum Durchführen des Verfahrens nach einem oder mehreren der Ansprüche 1 bis 9 mit einem zumindest zwei Leiter eines Wechselstromnetzes umfassenden Differenzstromsensor (3) und mit einem Differenzstromrelais (1), das über einen Leistungs- oder Lastschalter (2) eine Last- bzw. Netzabschaltung durchführt, sobald der Differenzstrom (I$\Delta$) einen bestimmten Ansprechwert übersteigt, **dadurch gekennzeichnet,**
**daß** der Differenzstromsensor (3) den Differenzstrom (I$\Delta$) unter Einschluß von Wechsel- und Gleichstromkomponenten allstromsensitiv erfaßt,

**daß** ein mit dem Differenzstrommesser (3) verbundener erster Tiefpaß (10) ausgangsseitig ein Fehlerstromsignal (If$_{DC}$) liefert, welches den gleichstrombedingten resistiven Fehlerstrom des Wechselstromnetzes repräsentiert,

**daß** das Differenzstromrelais (1) ein elektronisches Phasen-Modul (13) aufweist, das aus dem über einen Hochpaß (11) ermittelten Wechselstromanteil (I$\Delta_{AC}$) des Differenzstroms (I$\Delta$) und aus einer aus der Netzwechselspannung abgeleiteten Vergleichsspannung (U$_{rms}$) unter Berücksichtigung des Phasenwinkels ($\varphi$) ein Fehlerstromsignal (If$_{AC}$) ermittelt, welches den wechselstrombedingten resistiven Fehlerstrom des Wechselstromnetzes repräsentiert,

**daß** zwischen den Hochpaß (11) und das Phasenmodul (13) ein frequenzbewertender zweiter Tiefpaß (15) geschaltet ist, der die mit zunehmender Frequenz abnehmende Frequenzabhängigkeit des menschlichen Körpers nachbildet,

**daß** die Ausgänge des ersten Tiefpasses (10) und des Phasen-Moduls (13) mit einem Addierer-Modul (14) verbunden sind, das die beiden Fehlerstromsignale (If$_{AC}$, If$_{DC}$) zu einem ausgangsseitigen, einem Gleichstromsignal entsprechenden Gesamtfehlerstromsignal (If) quadratisch addiert,

**daß** der Ausgang des Addierer-Moduls (14) mit dem Eingang eines Vergleicher-Moduls (19) verbunden ist, das das Gesamtfehlerstromsignal (If) mit einem für den Personenschutz geeigneten kleineren Ansprechwert (If$_g$) vergleicht und den Lastschalter (2) auslösend ansteuert, wenn dieser Ansprechwert überschritten wird.

11. Einrichtung nach Anspruch 10, **dadurch gekennzeichnet, daß** das Vergleicher-Modul (19) eingangsseitig zum Berücksichtigen des gesamten Differenzstroms (I$\Delta$) auch direkt mit dem Differenzstromsensor (3) verbunden ist und zwei Einstellmittel (16, 17) zur Vorgabe eines kleineren Ansprechwertes (If$_g$) für das Fehlerstrom-Signal (If) und eines größeren Ansprechwertes (I$\Delta_g$) für den gesamten Differenzstrom (I$\Delta$) aufweist.

12. Einrichtung nach Anspruch 10 oder 11, **dadurch gekennzeichnet, daß** das elektronisch aufgebaute Differenzstromrelais (1) zur Spannungsversorgung ein aus dem Wechselstromnetz gespeistes Netzteil (4) aufweist und mit einer ständig arbeitenden Funktionsselbstüberwachung ausgebildet ist, die auch bei Funktionsstörungen des Differenzstromrelais (1) zu einer Last- bzw. Netzabschaltung durch das Differenzstromrelais (1) führt.

13. Einrichtung nach einem der Ansprüche 10 bis 12, **dadurch gekennzeichnet, daß** das Differenzstromrelais (1) bei dreiphasigen Wechselstromnetzen ein Netzteil mit einer netzseitig redundanten Spannungsversorgung aufweist, die sicherstellt, daß das Differenzstromrelais (1) bei einem Phasen-Ausfall oder bei einem Neutralleiter-Ausfall weiterarbeitet, solange noch zwei Phasen oder eine Phase und der Neutralleiter zur Verfügung stehen.

14. Einrichtung nach einem der Ansprüche 10 bis 13, **dadurch gekennzeichnet, daß** ein von dem Netzteil (4) aufgeladener Speicherkondensator (5) vorhanden ist, der bei Ausfall der geräteinternen Spannungsversorgung vorübergehend die Energie zum Betreiben von Teilen (18, 21, 22) des Differenzstromrelais (1) liefert und der den Lastschalter (2) dann zum Auslösen bringt, wenn bei einem Mehrphasennetz alle Netzphasen bis auf eine Netzphase ausgefallen sind oder wenn bei einem Einphasennetz der Neutralleiter ausgefallen ist.

15. Einrichtung nach einem der Ansprüche 10 bis 14, **dadurch gekennzeichnet, daß** zur Überwachung des Potentialausgleichsleiters (PE) des Wechselstromnetzes ein Stromwandler oder Differenzstromsensor (25) den Potentialausgleichsleiter (PE) umfaßt und mit dem Vergleicher-Modul (19) verbunden ist, wobei eine Last- bzw. Netzabschaltung erfolgt, wenn das Ausgangssignal des Stromwandlers oder Differenzstromsensor (25) eine Erhöhung des Erdungswiderstandes (R$_G$) über einen zulässigen Wert erkennen läßt.

16. Einrichtung nach einem der Ansprüche 10 bis 15, **dadurch gekennzeichnet, daß** zur Überwachung des Potentialausgleichsleiters (PE) des Wechselstromnetzes der Potentialausgleichsleiter durch zwei Stromwandler geführt ist, daß der erste Stromwandler einen kleinen Prüfstrom in die vom Potentialausgleichsleiter (PE) und dem Erdungswiderstand (R$_G$) gebildete Schleife einprägt, daß der zweite Stromwandler diesen Prüfstrom erfaßt und daß eine Last- bzw. Netzabschaltung erfolgt, wenn das Ausgangssignal des zweiten Stromwandlers kleiner wird als ein bestimmter Anteil, der eine Erhöhung des Widerstandes (R$_{PE}$) des Schutzleiters bzw. Potentialausgleichsleiters über einen zulässigen Wert erkennen läßt.

17. Einrichtung nach einem der Ansprüche 10 bis 16, **dadurch gekennzeichnet, daß** das Vergleicher-Modul (19) mit einer Digitalschnittstelle (20, 23) verbunden ist, an die zumindest ein Zusatzmittel anschließbar ist, wie ein Meßdaten-Anzeigemittel und/oder ein Isolationsüberwachungsgerät, das den Isolationswiderstand des zu überwachenden Netzes im abgeschalteten Zustand, jedoch inklusive der daran angeschlossenen Verbraucher, überwacht, und/oder ein Mittel zur Überwachung des Widerstandes des Potentialausgleichsleiters (PE).

**18.** Einrichtung nach einem der Ansprüche 10 bis 17, **dadurch gekennzeichnet, daß** das Fehler- oder Differenzstromrelais (1), der Differenzstromsensor (3) und der Last- oder Leistungsschalter (2) zu einem Baumodul zusammengefaßt sind oder auf zwei Baumodule mit separatem Lastschalter (2) oder auf drei Baumodule verteilt sind.

**19.** Einrichtung nach einem der Ansprüche 10 bis 18, **dadurch gekennzeichnet, daß** der Wechselstromkomponenten und Gleichstromkomponenten erfassende allstromsensitive Differenzstromsensor (2) in an sich bekannter Weise einen zumindest zwei Netzleiter des zu überwachenden Wechselstromnetzes umschließenden weichmagnetischen Kern mit zwei gegenläufigen Wicklungen (W1, W2) gleicher Windungszahl und femer zwei abwechselnd arbeitende elektronische Schalter (S1, S2) aufweist, wobei diese Glieder Bestandteile eines Schwingungskreises sind und wobei das ausgangsseitige Schwingungssignal einen den Kern durchfließenden Gesamtdifferenzstrom allstromsensitiv repräsentiert.

**Claims**

**1.** Method for monitoring insulation and fault current in an electrical alternating current (AC) network, a differential current, formed by a vectorial addition, being detected therein between at least two network conductors, the product between the amplitude of the AC component of the differential current and the cosine of a phase angle $\varphi$ between the AC component of the differential current and the AC network voltage between at least two conductors of the network also being ascertained as a measure of the resistive fault current of the network, and the load shutoff being performed if the resistive fault current exceeds a certain response value, **characterised in that** the differential current (I∆), containing AC and DC components, of the AC network is detected with universal current sensitivity, **in that** the AC component, containing both a capacitive component and a resistive component, of the differential current detected with universal current sensitivity, is obtained by a high-pass filter (11) with a first limit frequency that is below the network frequency, **in that** the DC component, to be assessed as a resistive fault current signal, of the differential current detected with universal current sensitivity is obtained by a low-pass filter (10) with a second limit frequency located below the first limit frequency, **in that** after the high-pass filter, for the sake of protecting human beings the AC component of the differential current is assessed as a function of frequency by a low-pass filter, **in that** the product between the amplitude of the AC component of the differential current and the cosine of the phase angle $\varphi$ is ascertained indirectly by an effectiveness measurement (12, 13), **in that** in said effectiveness measurement, a multiplication of the AC component of the differential current by a multiplication signal and a subsequent arithmetic averaging are performed, the multiplication signal corresponding to the AC network voltage, which is kept constant with respect to its effective value, **in that** the resistive fault current signal on a DC side and the resistive fault current signal on an AC side ascertained from the AC component are subjected to a quadratic addition (14) in order to ascertain a resistive total fault current signal or total fault current (If), and **in that** the load shutoff is performed if the resistive total fault current signal exceeds a certain response value.

**2.** Method according to claim 1, **characterised in that** the resistive fault current (If) ascertained is compared with a smaller response value ($If_g$) suitable for protecting human beings, **in that** the total differential current detected (I∆), which includes the AC components and can at the same time include DC components, is compared with a greater response value ($I∆_g$) suitable for protecting property, and **in that** a load or network shutoff (2) is performed if at least one of the response values is exceeded.

**3.** Method according to claim 2, **characterised in that** the smaller response value ($If_g$) and/or the greater response value ($I∆_g$) are adjustable.

**4.** Method according to claim 3, **characterised in that** the smaller response value ($If_g$) for protecting human beings is adapted flexibly to the network conditions prevailing in operation, the ohmic earthing resistance being measured, and the response value being adjusted such that it corresponds to the quotient of the maximum allowable touch voltage and the ohmic earthing resistance.

**5.** Method according to any of claims 1 to 4, for an AC network with an equipotential bonding conductor, **characterised in that** for checking the function of the equipotential bonding conductor, the current flowing in the normal situation as a certain component of the total differential current through the equipotential bonding conductor is detected, and **in that** a load or network shutoff is then performed if this current is less than the certain component.

**6.** Method according to any of claims 1 to 4, for an AC network with an equipotential bonding conductor, **characterised in that** for checking the function of the equipotential bonding conductor, a test current is fed into the equipotential bonding conductor, **in that** this test current, which in the normal situation flows through the equipotential bonding conductor and the ohmic earthing resistance, is detected, and **in that** then a load or network shutoff is performed if an increase in the total earthing resistance above an allowable value is detectable.

7. Method according to any of claims 1 to 6, **characterised in that** for monitoring a three-phase electrical AC network with or without neutral conductors, the method is performed separately for each of the three network conductors, **in that** the AC component of the differential current of all three network conductors is detected as a first network variable, furthermore the three AC network voltages between each network conductor and a neutral conductor, or in the absence of the latter between each network conductor and an equipotential bonding conductor, are detected, and the corresponding three products between the amplitude of the AC component of the differential current and the cosine values of the three phase angles φ are ascertained, the load shutoff being performed if one of these products exceeds the certain response value.

8. Method according to any of claims 1 to 7, **characterised in that** the load or network shutoff (2) is performed with universal polarity.

9. Method according to any of claims 1 to 8, **characterised in that** after a load or network shutoff dictated by the differential current or fault current, or some other network shutoff, the insulation resistance of the shut-off network is measured and compared with a limit value representing the normal situation, and **in that** the load or network is turned back on again only if the measured insulation resistance of the network exceeds the limit value.

10. Device for carrying out the method according to any one or more of claims 1 to 9, having a differential current sensor (3) that includes at least two network conductors of an AC network, and having a differential current relay (1), which via a power or load switch (2) performs a load or network shutoff as soon as the differential current (IΔ) exceeds a certain response value, **characterised in that** the differential current sensor (3) detects the differential current (IΔ) with a universal current sensitivity, including AC and DC components, **in that** a first low-pass filter (10) connected to the differential current sensor (3) supplies a fault current signal ($If_{DC}$) on its output side that represents the DC-dictated resistive fault current of the AC network, **in that** the differential current relay (1) has an electronic phase module (13), which from the AC component ($IΔ_{AC}$) of the differential current (IΔ) ascertained via a high-pass filter (11), and from a comparison voltage ($U_{rms}$) derived from the AC network voltage, taking into account a phase angle φ, a fault current signal

($If_{AC}$) is ascertained, which represents an AC-dictated resistive fault current of the AC network, **in that** a frequency-assessed second low-pass filter (15) is connected between the high-pass filter (11) and the phase module (13) and simulates the frequency dependency of the human body, which decreases as the frequency increases, **in that** the outputs of the first low-pass filter (10) and of the phase module (13) are connected to an adder module (14), which quadratically adds the two fault current signals ($If_{AC}$, $If_{DC}$) to form a total fault current signal (If) on the output side that corresponds to a DC signal, **in that** the output of the adder module (14) is connected to the input of a comparator module (19), which compares the fault current signal (If) with a smaller response value ($If_g$) suitable for protecting human beings and triggers the load switch (2) to trip it if this response value is exceeded.

11. Device according to claim 10, **characterised in that** the comparator module (19) is connected on the input side, for taking the total differential current (IΔ) into account, directly with the differential current sensor (3) as well and has two adjusting means (16, 17) for specifying a smaller response value ($If_g$) for the fault current signal (If) and a greater response value ($IΔ_g$) for the total differential current (IΔ).

12. Device according to claim 10 or 11, **characterised in that** for voltage supply, the electronically constructed differential current relay (1) has a power supply (4) which is supplied from the AC network and is formed with a constantly operating functional self-monitoring means, which even in the event of malfunctions of the differential current relay (1) leads to a load or network shutoff by the differential current relay (1).

13. Device according to any of claims 10 to 12, **characterised in that** the differential current relay (1), in three-phase AC networks, has a power supply with a voltage supply that is redundant on the network side and ensures that in the event of a phase failure or a neutral conductor failure, the differential current relay (1) will continue to operate as long as two phases, or one phase and the neutral conductor, are still available.

14. Device according to any of claims 10 to 13, **characterised in that** a storage capacitor (5) charged by the power supply (4) is present, which in the event of failure of the internal voltage supply of the apparatus temporarily supplies the energy for operating portions (18, 21, 22) of the differential current relay (1) and causes the load switch (2) to be tripped if, in a multiphase network, all the network phases except for one have failed, or in a single-phase network if the neutral conductor has failed.

**15.** Device according to any of claims 10 to 14, **characterised in that** for monitoring the equipotential bonding conductor (PE) of the AC network, a current converter or differential current sensor (25) includes the equipotential bonding conductor (PE) and is connected to the comparator module (19), a load or network shutoff being effected if the output signal of the current converter or differential current sensor (25) indicates an elevation of the earthing resistance ($R_G$) above an allowable value.

**16.** Device according to any of claims 10 to 15, **characterised in that** for monitoring the equipotential bonding conductor (PE) of the AC network, the equipotential bonding conductor is managed by two current converters, **in that** the first current converter impresses a low test current into the loop formed by the equipotential bonding conductor (PE) and the earthing resistance ($R_G$), **in that** the second current converter detects this test current; and that a load or network shutoff is effected if the output signal of the second current converter becomes less than a certain proportion that indicates an increase in the resistance ($R_{PE}$) of the protective conductor or equipotential bonding conductor above an allowable value.

**17.** Device according to any of claims 10 to 16, **characterised in that** the comparator module (19) is connected to a digital interface (20, 23), to which at least one additional means can be connected, such as a measurement data display means and/or an insulation monitoring device that monitors the insulation resistance of the network to be monitored in the off state, but including the consumers connected to the network, and/or a means for monitoring the resistance of the equipotential bonding conductor (PE).

**18.** Device according to any of claims 10 to 17, **characterised in that** the fault current or differential current relay (1), the differential current sensor (3), and the load or power switch (2) are combined into a structural module, or are distributed between two structural modules with separate load switches (2), or are distributed to three structural modules.

**19.** Device according to any of claims 10 to 18, **characterised in that** the differential current sensor (2) with universal current sensitivity for detecting the AC components and DC components has, in a manner known *per se,* a soft-magnetic core surrounding at least two network conductors of the AC network to be monitored, the core having two contrary windings (W1, W2) with the same number of turns and also has two electronic switches (S1, S2) that operate in alternation, these elements being components of an oscillation circuit, and the oscillation signal on the output side, with universal current sensitivity, representing a total differential current flowing through the core.

## Revendications

**1.** Procédé pour la surveillance de l'isolation et des courants de défaut dans un réseau électrique alternatif, dans celui-ci étant prélevé le courant différentiel formé par addition vectorielle entre au moins deux conducteurs du réseau, le produit entre l'amplitude de la quote-part de courant alternatif du courant différentiel et le cosinus de l'angle de phase φ entre la quote-part de courant alternatif du courant différentiel ainsi que la tension alternative du réseau entre au moins deux conducteurs du réseau étant par ailleurs déterminé en tant que mesure pour le courant de défaut résistif du réseau et la coupure de charge étant réalisée lorsque le courant de défaut résistif dépasse une certaine valeur de réponse, **caractérisé en ce**

que le courant différentiel (I∆) du réseau de courant alternatif contenant des quotes-parts de courant alternatif et des quotes-parts de courant continu est prélevé de manière sensible à tous les courants,

que la quote-part de courant alternatif contenant des composantes capacitives ainsi que résistives du courant différentiel prélevé de manière sensible à tous les courants est obtenue par un filtrage passe-haut (11) avec une première fréquence limite située en dessous de la fréquence du réseau,

que la quote-part de courant continu à évaluer comme signal de courant de défaut résistif du courant différentiel prélevé de manière sensible à tous les courants est obtenue par un filtrage passe-bas (10) avec une deuxième fréquence limite située en dessous de la première fréquence limite,

qu'après le filtrage passe-haut, la quote-part de courant alternatif du courant différentiel est évaluée par un filtrage passe-bas (15), en fonction de la fréquence pour une protection des personnes,

que le produit entre l'amplitude de la quote-part de courant alternatif du courant différentiel et le cosinus de l'angle de phase φ est déterminé indirectement par une mesure de la puissance effective (12, 13),

que, lors de cette mesure de la puissance effective, ont lieu une multiplication de la quote-part de courant alternatif du courant différentiel par un signal de multiplication et ensuite une formation de la moyenne arithmétique, le signal de multiplication de la tension correspondant à la tension alternative du réseau, qui est maintenue constante qui concerne sa valeur effective,

que, pour la détermination d'un signal de courant de défaut global résistif ou d'un courant de dé-

faut global (If), le signal de courant de défaut résistif du côté du courant continu et le signal de courant de défaut résistif du côté du courant alternatif, qui est déterminé à partir de la quote-part de courant alternatif, sont soumis à une addition quadratique (14) et

que la coupure de charge est réalisée lorsque le signal de courant de défaut global résistif dépasse une valeur de réponse déterminée.

2. Procédé selon la revendication 1, **caractérisé en ce que** le courant de défaut global résistif déterminé (If) est comparé à une valeur de réponse (If$_g$) plus petite appropriée pour une protection des personnes,

que le courant différentiel global prélevé (I$\Delta$), qui contient des composantes de courant alternatif et peut en outre contenir des composantes de courant continu, est comparé à une valeur de réponse (I$\Delta_g$) plus grande appropriée pour une protection des installations et

que qu'une coupure de charge ou une coupure de réseau (2) est réalisée lorsqu'au moins une des valeurs de réponse est dépassée.

3. Procédé selon la revendication 2, **caractérisé en ce que** la valeur de réponse plus petite (If$_g$) et/ou la valeur de réponse plus grande (I$\Delta_g$) sont réglables.

4. Procédé selon la revendication 3, **caractérisé en ce que**, pour la protection des personnes, la valeur de réponse plus petite (If$_g$) est adaptée de manière souple aux conditions de réseau existant en fonctionnement, la résistance ohmique de mise à la terre étant mesurée et la valeur de réponse étant réglée de telle façon qu'elle corresponde au quotient de la tension de contact maximale admissible et de la résistance ohmique de mise à la terre.

5. Procédé selon l'une des revendications 1 à 4 pour un réseau de courant alternatif avec un conducteur de compensation de potentiel, **caractérisé en ce que**, pour la vérification de la fonction du conducteur de compensation de potentiel, on prélève le courant traversant dans le cas normal le conducteur de compensation de potentiel en tant que quote-part déterminée du courant différentiel global et qu'ensuite a lieu une coupure de charge ou une coupure de réseau si ce courant est inférieur à la quote-part déterminée.

6. Procédé selon l'une des revendications 1 à 4 pour un réseau de courant alternatif avec un conducteur de compensation de potentiel, **caractérisé en ce que**, pour la vérification de la fonction du conducteur de compensation de potentiel, un courant de vérification est introduit dans celui-ci, que ce courant de vérification traversant dans le cas normal le conducteur de compensation de potentiel et la résistance ohmique de mise à la terre est prélevé et qu'ensuite a lieu une coupure de charge ou une coupure de réseau si une augmentation de la résistance globale de mise à la terre au-dessus d'une valeur admissible apparaît.

7. Procédé selon l'une des revendications 1 à 6, **caractérisé en ce que**, pour la surveillance d'un réseau alternatif triphasé avec ou sans conducteur neutre, le procédé est réalisé séparément pour chacun des trois conducteurs du réseau, et ceci par le fait que la quote-part de courant alternatif du courant différentiel de tous les trois conducteurs du réseau est prélevée comme première grandeur du réseau, par le fait que par ailleurs les trois tensions alternatives du réseau sont prélevées entre chaque conducteur du réseau ainsi qu'un conducteur neutre ou, en cas d'absence de celui-ci, entre chaque conducteur du réseau et un conducteur de compensation de potentiel et par le fait que sont déterminés les trois produits correspondants entre l'amplitude de la quote-part de courant alternatif du courant différentiel ainsi que les valeurs de cosinus des trois angles de phase φ, la coupure de charge ayant lieu lorsqu'un de ces produits dépasse la valeur de réponse déterminée.

8. Procédé selon l'une des revendications 1 à 7, **caractérisé en ce que** la coupure de charge ou la coupure de réseau (2) a lieu sur tous les pôles.

9. Procédé selon l'une des revendications 1 à 8, **caractérisé en ce qu'**après une coupure de charge ou une coupure de réseau provoquée par le courant différentiel ou par le courant de défaut ou après une autre coupure de réseau, la résistance d'isolation du réseau coupé est mesurée et est comparée à une valeur limite représentant le cas normal, et qu'un réenclenchement n'a lieu que si la résistance d'isolation mesurée du réseau dépasse la valeur limite.

10. Dispositif pour la réalisation du procédé selon l'une ou plusieurs des revendications 1 à 9 avec un capteur de courant différentiel (3) comprenant au moins deux conducteurs d'un réseau de courant alternatif et avec un relais de courant différentiel (1), qui réalise une coupure de charge ou une coupure de réseau par l'intermédiaire d'un commutateur de puissance ou d'un commutateur de charge (2) dès que le courant différentiel (I$\Delta$) dépasse une valeur de réponse déterminée,

**caractérisé en ce**

que le capteur de courant différentiel (3) prélève le courant différentiel (I$\Delta$) de manière sensible à tous les courants en incluant des composantes de courant alternatif et des composantes de courant continu,

qu'un premier filtre passe-bas (10) relié au capteur de courant différentiel (3) fournit à la sortie un signal de courant de défaut ($If_{DC}$), qui représente le courant de défaut résistif du réseau de courant alternatif du au courant continu,

que le relais de courant différentiel (1) comprend un module électronique de phase (13) qui détermine, à partir d'une quote-part de courant alternatif ($I\Delta_{AC}$) du courant différentiel ($I\Delta$) déterminée par l'intermédiaire d'un filtre passe-haut (11) et à partir d'une tension de comparaison ($U_{rms}$) dérivée de la tension alternative du réseau, et en tenant compte de l'angle de phase ($\varphi$), un signal de courant de défaut ($If_{AC}$), qui représente le courant de défaut résistif du réseau de courant alternatif du au courant alternatif,

qu'entre le filtre passe-haut (11) et le module de phase (13) est monté un second filtre passe-bas (15) évaluant la fréquence, qui reproduit la dépendance du corps humain par rapport à la fréquence, décroissante avec l'augmentation de la fréquence,

que les sorties du premier filtre passe-bas (10) et du module de phase (13) sont reliées à un module d'addition (14), qui additionne quadratiquement les deux signaux de courant de défaut ($If_{AC}$, $If_{DC}$) en un signal de courant de défaut global du côté sortie ($If$), qui correspond à un signal de courant continu,

que la sortie du module d'addition (14) est reliée à l'entrée d'un module de comparaison (19), qui compare le signal de courant de défaut global ($If$) à une valeur de réponse plus petite ($If_g$) appropriée pour la protection des personnes et qui actionne le commutateur de charge (2) en déclenchement si cette valeur de réponse est dépassée.

11. Dispositif selon la revendication 10, **caractérisé en ce que** du côté de l'entrée, pour tenir compte du courant différentiel global ($I\Delta$), le module de comparaison (19) est aussi relié directement au capteur de courant différentiel (3) et comprend deux éléments de réglage (16, 17) pour imposer une valeur de réponse plus petite ($If_g$) pour le signal de courant de défaut ($If$) et une valeur de réponse plus grande ($I\Delta_g$) pour le courant différentiel global ($\Delta I$).

12. Dispositif selon la revendication 10 ou 11, **caractérisé en ce que**, pour l'alimentation en tension, le relais de courant différentiel de construction électronique (1) comprend un bloc secteur (4) alimenté à partir du réseau de courant alternatif et est conçu avec une auto-surveillance de son fonctionnement travaillant en permanence, qui conduit à une coupure de charge ou à une coupure de réseau par le relais de courant différentiel (1) même en cas de perturbations du fonctionnement du relais de courant différentiel (1).

13. Dispositif selon l'une des revendications 10 à 12, **caractérisé en ce que**, dans le cas de réseaux à courant alternatif triphasés, le relais de courant différentiel (1) comprend un bloc secteur avec une alimentation en tension redondante du côté du réseau, qui garantit que le relais de courant différentiel (1) continue à fonctionner en cas de défaillance d'une phase ou de défaillance d'un conducteur neutre tant que deux phases ou une phase et un conducteur neutre sont encore disponibles.

14. Dispositif selon l'une des revendications 10 à 13, **caractérisé en ce qu'**il existe un condensateur d'accumulation (5.) chargé par le bloc secteur (4) qui, en cas de défaillance de l'alimentation en tension interne à l'équipement, fournit provisoirement l'énergie nécessaire pour exploiter des parties (18, 21, 22) du relais de courant différentiel (1) et qui provoque le déclenchement du commutateur de charge (2) lorsque, dans un réseau multiphasé, toutes les phases à l'exception d'une phase sont défaillantes ou lorsque, dans un réseau monophasé, le conducteur neutre est défaillant.

15. Dispositif selon l'une des revendications 10 à 14, **caractérisé en ce que**, pour la surveillance du conducteur de compensation de potentiel (PE) du réseau à courant alternatif, un convertisseur de courant ou capteur de courant différentiel (25) comprend le conducteur de compensation de potentiel (PE) et est relié au module de comparaison (19), une coupure de charge ou une coupure de réseau ayant lieu lorsque le signal de sortie du convertisseur de courant ou capteur de courant différentiel (25) fait apparaître une augmentation de la résistance de mise à la terre ($R_G$) au-dessus d'une valeur admissible.

16. Dispositif selon l'une des revendications 10 à 15, **caractérisé en ce que**, pour la surveillance du conducteur de compensation de potentiel (PE) du réseau à courant alternatif, le conducteur de compensation de potentiel est conduit à travers deux convertisseurs de courant, que le premier convertisseur de courant introduit un faible courant de contrôle dans la boucle formée par le conducteur de compensation de potentiel (PE) et par la résistance de mise à la terre ($R_G$), que le deuxième convertisseur de courant prélève ce courant de contrôle et qu'une coupure de charge ou une coupure de réseau a lieu lorsque le signal de sortie du deuxième convertisseur de courant devient plus petit qu'une quote-part déterminée, qui fait apparaître une augmentation de la résistance ($R_{PE}$) du conducteur de protection ou conducteur de compensation de potentiel au-dessus d'une valeur admissible.

**17.** Dispositif selon l'une des revendications 10 à 16, **caractérisé en ce que** le module de comparaison (19) est relié à une interface numérique (20, 23), à laquelle peut être raccordé au moins un moyen supplémentaire, tel qu'un moyen d'affichage de données de mesure et/ou un appareil de surveillance de l'isolation, qui surveille la résistance d'isolation du réseau à surveiller dans l'état de coupure, mais en incluant les récepteurs qui y sont raccordés, et/ou un moyen pour la surveillance de la résistance du conducteur de compensation de potentiel (PE).

**18.** Dispositif selon l'une des revendications 10 à 17, **caractérisé en ce que** le relais de courant de défaut ou de courant différentiel (1), le capteur de courant différentiel (3) et le commutateur de charge ou de puissance (2) sont rassemblés en un module ou sont répartis sur deux modules avec commutateur de charge séparé (2) ou sur trois modules.

**19.** Dispositif selon l'une des revendications 10 à 18, **caractérisé en ce que** le capteur de courant différentiel (2) sensible à tous les courants et prélevant des composantes de courant alternatif et des composantes de courant continu comprend, d'une manière connue en soi, un noyau magnétique doux avec deux bobinages opposés (W1, W2) ayant le même nombre de spires, qui entoure au moins deux conducteurs du réseau à courant alternatif à surveiller, et en outre deux commutateurs électroniques (S1, S2) fonctionnant en alternance, ces éléments étant des constituants d'un circuit oscillant et le signal d'oscillation du côté sortie représentant de manière sensible à tous les courants un courant différentiel global circulant à travers le noyau.

Fig. 1

i(t) •————————→ | 30 +1/-1 | ————→ | 31 | ————————• I_W

u_s ⇡

u(t) •————————→ | 32 |

**Fig. 2**

U_Ref •————————→

i(t) •————————→ | 40 | ————→ | 41 | ————————• I_W

u(t) •————————→

**Fig. 3**

i(t) •————————→ | 50 | ————→ | 51 | ————————• I_W

u'(t) ⇡

u(t) •————————→ | 52 |

**Fig. 4**

| 53 |

U_Ref •————————→ | 54 | ←——— | 55 |

FIG. 5

$U_b$

$R_m$          $R_m$

$U_{dif}$

W1          W2

S!          S2

**FIG. 6**